# EUROPEAN PATENT APPLICATION

(11) **EP 4 400 556 A1**
(43) Date of publication of application: **17.07.2024**
(21) Application number: 22867385.1
(22) Date of filing: 07.09.2022
(51) Int. Cl.: C09K 5/06, F28D 20/02

(54) **LATENT HEAT STORAGE PARTICLE, HEAT EXCHANGE MATERIAL AND METHOD FOR MANUFACTURING LATENT HEAT STORAGE PARTICLE**

(30) Priority: 07.09.2021 JP 2021145531
(71) Applicant: National University Corporation Hokkaido University, Sapporo-shi, Hokkaido 060-0808 (JP)
(72) Inventor: NOMURA, Takahiro, Sapporo-shi, Hokkaido 060-0808 (JP); ISHIDA, Ryosuke, Sapporo-shi, Hokkaido 060-0808 (JP); KAWAGUCHI, Takahiro, Sapporo-shi, Hokkaido 060-0808 (JP); SAKAI, Hiroki, Sapporo-shi, Hokkaido 060-0808 (JP); JEEM, Melbert, Sapporo-shi, Hokkaido 060-0808 (JP); SHIMIZU, Yuto, Sapporo-shi, Hokkaido 060-0808 (JP)
(74) Representative: Boult Wade Tennant LLP
(86) International application number: PCT/JP2022/033596
(87) International publication number: WO 2023/038063

(57) **Abstract**

A latent heat storage particle comprising:
a core particle; and
a covering portion covering at least a part of a surface of the core particle,
wherein a component of the core particle is an element selected from the group consisting of Al, Mg, Si, Ti, Fe, Ni, Cu, Zn, Sn, Sb, Ga, In, Bi, Pb, and Cd, or an alloy or a compound containing the element as a main component, and has a melting point of 100°C or higher,
a component of the covering portion is one or more selected from the group consisting of an element, an alloy containing the element and an inorganic compound containing the element, and a mixture thereof, which cause no chemical reaction with the core particle in a temperature range of an operating temperature and which are different from the component of the core particle, and
at least a part of the covering portion has a particle shape.

## Description

### TECHNICAL FIELD

The present disclosure relates to a latent heat storage particle, a heat exchange material, and a method for manufacturing a latent heat storage particle.

### BACKGROUND ART

As a method of storing heat, sensible heat storage using a temperature change and latent heat storage using a phase change of a substance are known. Among these technologies, the sensible heat storage technology can store heat at a high temperature, but uses only sensible heat due to the temperature change of the substance, and thus has a problem of low heat storage density. On the other hand, since the latent heat storage technology uses a solid-liquid phase change latent heat of a phase change material (PCM), the latent heat storage technology can store heat at a higher density than the sensible heat storage technology. Since exhaust heat derived from reaction heat can be recovered, transported, and supplied at a constant phase change temperature, attention is paid in the fields of solar heat utilization and exhaust heat utilization. Since the PCM melts and becomes liquid at the time of heat storage, encapsulation of the PCM is necessary to prevent leakage of the PCM in a liquid state. Various methods have been proposed as a PCM encapsulation method.

For example, Patent Document 1 proposes a latent heat storage capsule in which a surface of a latent heat storage material is coated with a single-layer, two-layer or three-layer metal film, and a latent heat storage capsule in which a latent heat storage material is coated with a metal film by an electrolytic plating method. Patent Document 2 proposes heat storage microcapsules including a core covered with a shell, in which the core contains at least one water-soluble latent heat storage material selected from a salt hydrate and a sugar alcohol and a polymer derived from a water-soluble monomer mixture of a water-soluble monofunctional monomer and a water-soluble multifunctional monomer, and the shell is composed of a hydrophobic resin, and a method of manufacturing the heat storage microcapsules. This technique is a microencapsulation technique of the PCM having a relatively low melting point.

Patent Document 3 proposes a heat-storing body including an internal heat-storing body including a substance having heat-storing properties and an outer shell enclosing the internal heat-storing body and containing ceramics having a relative density of 75% or more. It has been proposed that the internal heat-storing body includes a metal containing at least one selected from the group consisting of Al, Mg, Sn, Zn, and Cu, or a carbonate compound, a hydroxide, a chloride, or a composite thereof, which includes at least one selected from the group consisting of K, Li, Na, Ca, and Mg, and the material of the outer shell (capsule) includes at least one selected from the group consisting of alumina, silicon nitride, and silicon carbide, or a composite including at least one selected from the group. The technique of Patent Document 3 is a technique in which PCM having a melting point in a high temperature range is encapsulated.

In the latent heat storage capsule of Patent Document 1, since heat resistance of a metal coating is low, it is difficult to maintain the metal coating in a high temperature state, and it is considered difficult to use the latent heat storage capsule in a high temperature state. The heat storage microcapsule described in Patent Document 2 is considered to be difficult to use in a severe environment at a high temperature where corrosion and the like easily occur. In addition, the heat-storing body described in Patent Document 3 includes the outer shell including ceramics, and is considered to be excellent in heat resistance and corrosion resistance, but is considered to be difficult to mold and process.

In view of the above problems, the present inventors have proposed, in Patent Document 4, a latent heat storage body microcapsule in which the surface of a core particle including a latent heat storage material of a metal or an alloy is covered with an oxide film of a constituent element of the core particle, a method for producing a latent heat storage body, a heat exchange material, and a catalytic functional latent heat storage body. Patent Document 5 proposes a latent heat storage body including a core portion and a coating layer and having a BET specific surface area of 10 m²/g or more, a method for producing a latent heat storage body, and a heat exchange material. According to these techniques, a step of separately preparing the core particle and the oxide film corresponding to the shell for accommodating the core particle and then accommodating the core particle inside the shell becomes unnecessary. Since expansion of the core particle does not occur when phase transformation from a solid phase to a liquid phase occurs, the component of the molten latent heat storage material remains inside a space covered with the oxide film, and the oxide film is not damaged. The oxide film can be chemically stable. In addition, according to Patent Document 5, the material of the core portion can be easily captured, and the occurrence of leakage of the core portion can be reduced.

### PRIOR ART DOCUMENTS

### PATENT DOCUMENTS

Patent Document 1: JP-A-1999-23172
Patent Document 2: JP-A-2012-140600
Patent Document 3: JP-A-2012-111825
Patent Document 4: JP-A-2019-173017
Patent Document 5: JP-A-2019-203128

### SUMMARY OF THE INVENTION

### PROBLEMS TO BE SOLVED BY THE INVENTION

In the method for producing a latent heat storage body each disclosed in Patent Documents 4 and 5, chemical conversion coating treatment and subsequent firing at a high temperature are required, and it is required to more easily produce the latent heat storage body. When metal-alloy PCM not containing Al is used as the core particle, it is difficult to perform microencapsulation by the conventional production method. The present disclosure has been made in view of the above circumstances, and an object of the present disclosure is to provide a method of producing a latent heat storage particle capable of suppressing leakage of PCM and easily producing a latent heat storage particle having a stable structure even after passing through a heat storage cycle. Another object of the present disclosure is to provide a latent heat storage particle in which leakage of PCM is suppressed and which has a stable structure even after passing through a heat storage cycle, and a heat exchange material including the latent heat storage particles.

### SOLUTIONS TO THE PROBLEMS

Aspect 1 of the present invention is a latent heat storage particle including a core particle and a covering portion covering at least a part of a surface of the core particle, wherein a component of the core particle is an element selected from the group consisting of Al, Mg, Si, Ti, Fe, Ni, Cu, Zn, Sn, Sb, Ga, In, Bi, Pb, and Cd, or an alloy or a compound containing the element as a main component, and has a melting point of 100°C or higher, a component of the covering portion is one or more selected from the group consisting of an element, an alloy containing the element and an inorganic compound containing the element, and a mixture thereof, which cause no chemical reaction with the core particle in a temperature range of an operating temperature and which are different from the component of the core particle, and at least a part of the covering portion has a particle shape.

Aspect 2 of the present invention is the latent heat storage particle according to the first aspect, wherein the core particle has an average particle diameter of 10 µm or more and 200 µm or less.

Aspect 3 of the present invention is the latent heat storage particle according to Aspect 1 or 2, wherein a particle shape of at least a part of the covering portion has an average particle diameter of 0.1 µm or more and 2 µm or less.

Aspect 4 of the present invention is the latent heat storage particle according to any one of Aspects 1 to 3, wherein a component of the core particle is one or more selected from the group consisting of Al, an Al-Si alloy, an Al-Cu-Si alloy, Sn, a Sn alloy, and a Zn-Al alloy.

Aspect 5 of the present invention is the latent heat storage particle according to any one of Aspects 1 to 4, wherein the inorganic compound in the component of the covering portion is one or more selected from the group consisting of ceramics, glass, and an α-alumina precursor that becomes α-Al₂O₃ by firing.

Aspect 6 of the present invention is the latent heat storage particle according to any one of Aspects 1 to 5, wherein the component of the covering portion is one or more selected from the group consisting of Al, α-Al₂O₃, AlOOH, Al(OH)₃, and glass.

Aspect 7 of the present invention is the latent heat storage particle according to any one of Aspects 1 to 6, wherein the covering portion includes one or more selected from the group consisting of an element contained in the core particle, an alloy and an inorganic compound containing the element, and a mixture thereof.

Aspect 8 of the present invention is a heat exchange material including the latent heat storage particle according to any one of Aspects 1 to 7.

Aspect 9 of the present invention is a method for manufacturing a latent heat storage particle, including: providing a core raw material particle in which a component is an element selected from the group consisting of Al, Mg, Si, Ti, Fe, Ni, Cu, Zn, Sn, Sb, Ga, In, Bi, Pb, and Cd, or an alloy or a compound containing the element as a main component and which has a melting point of 100°C or higher, and a child particle that is one or more selected from the group consisting of an element, an alloy containing the element and an inorganic compound containing the element, and a mixture thereof, which cause no chemical reaction with the core particle in a temperature range of an operating temperature and which are different from the component of the core particle, and causing the core raw material particle and the child particle to collide with each other by a high-speed air flow impact method to perform hybridization in which the child particle is secured to a surface of the core raw material particle.

Aspect 10 of the present invention is the method for manufacturing a latent heat storage particle according to Aspect 9, wherein the core raw material particle has an average particle diameter of 10 µm or more and 200 µm or less, the child particle has an average particle diameter of 0.1 µm or more and 2 µm or less, and a ratio of (average particle diameter of child particle/average particle diameter of core raw material particle) is 0.001 or more and 0.2 or less.

Aspect 11 of the present invention is the method for manufacturing a latent heat storage particle according to Aspect 9 or 10, wherein the hybridization is performed at a circumferential velocity of 40 m/s or more and 100 m/s or less.

Aspect 12 of the present invention is the method for manufacturing a latent heat storage particle according to any one of Aspects 9 to 11, wherein heat treatment is performed at a temperature equal to or higher than the melting point of the component of the core raw material particle after the hybridization.

### EFFECTS OF THE INVENTION

According to the present invention, it is possible to provide a latent heat storage particle in which leakage of PCM is suppressed and which has a stable structure even after passing through a heat storage cycle, and a heat exchange material including the latent heat storage particles. In addition, it is possible to provide a method for manufacturing a latent heat storage particle capable of easily manufacturing the latent heat storage particle.

### BRIEF DESCRIPTION OF THE DRAWINGS

Fig. 1 is a schematic cross-sectional view of a high-speed airflow impact device.
Fig. 2 is an SEM micrograph of a sample after hybridization in Examples.
Fig. 3 is an SEM micrograph of the sample after a repeated test in Examples.
Fig. 4 is an XRD measurement result in Examples.
Fig. 5 is a differential scanning calorimetry result in Examples.
Fig. 6 is an SEM micrograph of a sample after a thermal durability test in Examples.
Fig. 7 is an XRD measurement result in Examples.
Fig. 8 is an SEM micrograph of the sample in Examples.
Fig. 9 is a STEM-EDS photograph of the sample in Examples.
Fig. 10 is a photograph of particles included in a covering portion of the sample in Examples.
Fig. 11 is a photograph of the particles included in the covering portion of the sample in Examples.
Fig. 12 is a photograph of the particles included in the covering portion of the sample in Examples.
Fig. 13 is a differential scanning calorimetry result of the sample in Examples.
Fig. 14 is a differential scanning calorimetry result of the sample in Examples.
Fig. 15 is an SEM micrograph of raw material particles used in Examples.
Fig. 16 is an SEM micrograph of the sample after hybridization in Examples.
Fig. 17 is an SEM micrograph of the sample before and after a repeated test in Examples.
Fig. 18 is an SEM micrograph of the sample after hybridization in Examples.
Fig. 19 is an SEM micrograph of the sample after heat treatment in Examples.
Fig. 20 is an SEM micrograph of the sample after heat treatment in Examples.
Fig. 21 is an SEM micrograph of the sample after heat treatment in Examples.
Fig. 22 is an SEM micrograph of the sample after heat treatment in Examples.
Fig. 23 is an XRD measurement result of the sample after heat treatment in Examples.
Fig. 24 is an XRD measurement result of the sample after heat treatment in Examples.
Fig. 25 is a differential scanning calorimetry result of the sample after heat treatment in Examples.
Fig. 26 is a differential scanning calorimetry result of the sample after heat treatment in Examples.
Fig. 27 is an SEM micrograph of the sample before and after the repeated test in Examples.
Fig. 28 is an SEM micrograph of the sample in Examples.
Fig. 29 is an SEM micrograph of the sample in Examples.
Fig. 30 is an SEM micrograph of the sample in Examples.
Fig. 31 is a differential scanning calorimetry result of the sample in Examples.
Fig. 32 is a differential scanning calorimetry result of the sample in Examples.
Fig. 33 is a differential scanning calorimetry result of the sample in Examples.
Fig. 34 is a differential scanning calorimetry result of the sample in Examples.
Fig. 35 is a differential scanning calorimetry result of the sample in Examples.
Fig. 36 is an SEM micrograph of the sample before and after the repeated test in Examples.
Fig. 37 is a differential scanning calorimetry result of the sample in Examples.
Fig. 38 is an SEM micrograph of the sample in Examples.
Fig. 39 is a differential scanning calorimetry result of the sample in Examples.
Fig. 40 is a differential scanning calorimetry result of the sample in Examples.

### DETAILED DESCRIPTION

As a result of intensive studies, the present inventors have found that by causing core raw material particles and child particles of a predetermined component to collide with each other by a high-speed airflow impact method, leakage of PCM is suppressed, and latent heat storage particles having a stable structure can be easily obtained even after a heat storage cycle. Hereinafter, a latent heat storage particle, a heat exchange material including the latent heat storage particles, and a method for manufacturing a latent heat storage particle according to the present embodiment will be described.

### [Latent heat storage particle]

### [Core particle]

A component of the core particle is an element selected from the group consisting of Al, Mg, Si, Ti, Fe, Ni, Cu, Zn, Sn, Sb, Ga, In, Bi, Pb, and Cd, or an alloy or a compound containing these elements as a main component, and has a melting point of 100°C or higher. The "main component" means that a proportion of the main component in the entire core particles is 50% by mass or more. As described above, it is necessary that the component included in the core particle do not melt at the time of forming a covering portion during the manufacturing of the latent heat storage particles, and it is necessary that the melting point is 100°C or higher. The core particle is a phase change substance (PCM) that can utilize solid-liquid phase change latent heat, a heat of melting can be preferably, for example, 150 J/g or more, and a high latent heat amount can be secured.

As described above, examples of the component included in the core particle include Sn (melting point: 232°C), In (melting point: 157°C), Bi (melting point: 272°C), Pb (melting point: 328°C), and Cd (melting point: 321°C) having a melting point lower than that of Al. In addition, Cu (melting point: 1085°C) having a melting point higher than that of Al can be mentioned. By providing latent heat storage particles in which these components are used as the core particles, it is possible to realize latent heat storage particles having a heat storage temperature different from that of latent heat storage particles in which the core particles are Al or an Al alloy that has been conventionally used. In consideration of the environment, a metal selected from the group consisting of Al, Mg, Sn, Zn, Bi, In, and Cu, or an alloy containing these metals as a main component is preferable.

Examples of more preferable components of the core particle include Sn and a Sn alloy mainly composed of Sn. Since the core particle contains Sn, PCM having a heat storage temperature (melting point) in a low temperature range can be easily achieved. As compared with latent heat storage particles in which Al is the core particle. Examples of the Sn alloy include Sn-Zn alloys. The Zn content of the Sn-Zn alloy is more than 0% by mass, and can be less than 50% by mass, further 20% by mass or less, and further 10% by mass or less. More preferably, the core particles contain Sn.

Another preferred component of the core particle includes an alloy of Al and Si (Al-Si alloy). In this case, the Si content is not particularly limited, and may be more than 0% by mass and less than 100% by mass. For example, the Si content can be in a range of 10% by mass or more and 90% by mass or less. Within this range, the Si content may be 10% by mass or more and 25% by mass or less.

Still another preferred component of the core particle includes an Al alloy of Cu and Si (Al-Cu-Si alloy). The contents of Cu and Si contained in the Al-Cu-Si alloy are not particularly limited as long as Cu and Si are each more than 0% by mass and the total of Cu and Si is 90% by mass or less.

Yet another preferred component of the core particle includes an alloy of Zn and Al (Zn-Al alloy). In this case, the Al content is not particularly limited, and may be more than 0% by mass and less than 100% by mass. The Al content may be 50% by mass or less.

The core particle may be metal Al containing no alloy component and having an Al concentration of 100%.

An average particle diameter of the core particles is preferably 10 µm or more and 200 µm or less. According to the present embodiment, the core particle (PCM) is the above-described component, and can realize a micro-order latent heat storage particle. The average particle diameter may be, for example, 100 µm or less, or 50 µm or less. In the present specification, the "average particle diameter" of the core particle, and the core raw material particle and the child particle described later is a value measured with a laser diffraction particle size distribution meter (for example, HORIBA LA-920). More specifically, a volume distribution of a particle group is measured with the laser diffraction particle size distribution meter, and a value (D50) of a cumulative 50 vol% diameter is regarded as the average particle diameter. The average particle diameter of the core particle included in the latent heat storage particle may be substantially the same as or smaller than the average particle diameter of the core raw material particle used for manufacturing the latent heat storage particle. According to the present embodiment, the latent heat storage particle only needs to have a core-shell structure, and at the time of production or use of the latent heat storage particle, even if a part of the surface of the core raw material particle reacts with, for example, the child particle, the outside air, and the like, and for example, a part of the surface of the core raw material particle made of metal is changed to an oxide, and a part of the metal contained in the core raw material particle is consumed, the function as latent heat storage particle can be exercised as long as the core-shell structure is maintained.

### [Covering portion]

The component of the covering portion includes one or more selected from the group consisting of an element, an alloy containing the element and an inorganic compound containing the element, and a mixture thereof, which are different from the component of the core particle and do not cause a chemical reaction with the core particle in a temperature range of an operating temperature. Examples of the operating temperature include a range of 100°C or higher and 1500°C or lower. Examples of the element include an element selected from the group consisting of Al, Mg, Si, Ti, Fe, Ni, Cu, Zn, Sn, Sb, Ga, In, Bi, Pb, and Cd. The inorganic compound also includes a mixture of two or more different inorganic compounds. The inorganic compound is preferably one or more selected from the group consisting of ceramics, glass, and an α-alumina precursor that becomes α-Al₂O₃ by firing. Examples of the ceramic include alumina such as α-Al₂O₃ and θ-Al₂O₃, and SiO₂ (silica). The α-alumina precursor is, for example, a compound that becomes α-Al₂O₃ by firing at a temperature of 880°C or higher, and examples of the α-alumina precursor include an Al-containing compound, an Al-containing oxide and/or an Al-containing hydroxide, and AlOOH and/or Al(OH)₃. The component of the covering portion is more preferably one or more selected from the group consisting of Al, α-Al₂O₃, AlOOH, Al(OH)₃, and glass.

When the core particle is a metal or an alloy and the covering portion is a ceramic, the metal contained in the core particle and the metal element contained in the ceramic included in the covering portion may be the same or different. For example, when the core particle is an Al alloy and the covering portion is an Al oxide, the component of the covering portion is an oxide and is different from the alloy which is the component of the core particle; however, Al which is a metal contained in the core particle and a metal element (Al) contained in the oxide as a ceramic included in the covering portion are the same.

The covering portion of the latent heat storage particle according to the present embodiment may have a thickness in a range of 200 nm to 5 µm. The covering portion may be, for example, a covering layer having a thickness of 1 to 2 µm.

The covering portion of the latent heat storage particle according to the present embodiment may cover at least a part of the surface of the core particle. A coverage of the covering portion on the surface of the core particle is preferably 50 area% or more. The coverage is more preferably 70 area% or more, still more preferably 80 area% or more, even more preferably 90 area% or more, and most preferably 100 area%. In the latent heat storage particle according to the present embodiment, the core particle may be covered with the component of the covering portion without gaps, and a dense shell may be formed. As long as the preferable coverage range is satisfied, it is allowable that the core particle is not covered with the component of the covering portion without gaps, exposed portions of the core particle are scattered, and gaps at a nano level, for example, generated by deposition of child particles exist. It is considered that degradation of the core particle due to use can be prevented even if there are exposed portions, gaps, and the like of the core particle. As described in Examples described later, for example, in the case of a core particle made of metal, it is considered that an oxide is formed at an exposed portion of the core particle exposed to the outside air, and progress of deterioration of the core particle due to consumption of metal or the like is prevented.

The latent heat storage particle according to the present embodiment is different from the conventional latent heat storage particles in that at least a part of the covering portion has a particle shape. The particle shape of at least a part of the covering portion can be derived from the child particles used at the time of manufacturing the latent heat storage particle. The particle shape of at least a part of the covering portion can be confirmed regardless of the presence or absence of heat treatment described later, and can be confirmed at least in an outermost layer region of the covering portion even when the heat treatment described later is performed. The particle shape of at least a part of the covering portion may be an aggregate of particles, and may be an aggregate of the child particles used at the time of manufacturing the heat storage particle. Thus, the phrase that "at least a part of the covering portion has a particle shape" in the latent heat storage particle means that at least 10 particles (some particles may be bonded to another particle) are confirmed when observed with a scanning electron microscope at a magnification of 10,000 times.

The particle shape of at least a part of the covering portion may have an average particle diameter of 0.1 µm or more and 2 µm or less. The average particle diameter refers to an average circle equivalent diameter of at least 10 particles observed with the electron microscope. A region other than a region in the covering portion of the particle shape of at least a part of the covering portion can be, for example, a porous or dense dense-solid layer formed by melting and aggregating the child particles.

The covering portion may include one or more (core particle-derived components) selected from the group consisting of an element contained in the core particle, an alloy and an inorganic compound containing the element, and a mixture thereof. As described above, examples of the element contained in the core particle include an element selected from the group consisting of Al, Mg, Si, Ti, Fe, Ni, Cu, Zn, Sn, Sb, Ga, In, Bi, Pb, and Cd. Examples of the inorganic compound include ceramics containing the element and glass containing the element. The core particle-derived component contained in the covering portion may contain an element contained in the core particle, and the form of the core particle-derived component may be the same as or different from that of the core particle. When the two forms are different from each other, for example, the component of the core particle is a metal, and the core particle-derived component is an oxide of the metal.

The phrase that the core particle-derived component is "contained" in the covering portion means that the core particle-derived component is at least partially in contact with the component included in the covering portion, and examples thereof include that the entire core particle-derived component is covered with the component included in the covering portion, a part of the core particle-derived component is covered with the component included in the covering portion, and the other part of the core particle-derived component is exposed to the outside air (for example, the core particle-derived component is present so as to be in contact with a part of the surface of the covering portion).

### (Heat exchange material formed of latent heat storage particles)

The present disclosure includes a heat exchange material formed of the latent heat storage particles according to the present embodiment. As the heat exchange material, the latent heat storage particles according to the present embodiment may be included in at least a part of the heat exchange material, and examples thereof include an aspect in which the latent heat storage particles are dispersed and contained in a thermal base material and an aspect in which the latent heat storage particles are dispersed and carried in a porous material. Examples of the heat exchange material include, but are not limited to, heat storage bricks, ceramic balls for heat storage, and porous ceramic filters.

### [Method for manufacturing latent heat storage particle]

A method for manufacturing a latent heat storage particle according to the present embodiment includes: providing a core raw material particle having a predetermined component and a child particle having a predetermined component; and causing the core raw material particle and the child particle to collide with each other by a high-speed airflow impact method, and thus to perform hybridization for fixing the child particle to a surface of the core raw material particle. According to this manufacturing method, unlike the conventional method for manufacturing a latent heat storage particle, microencapsulation can be realized even when a metal-alloy PCM containing no Al is used as a core raw material particle. Also, it is possible to manufacture latent heat storage particles using PCM having various heat storage temperatures as core particles. In addition, the surface of the core raw material particle can be easily covered with a material other than alumina, and the latent heat storage particle in which the covering portion is formed of a material other than alumina can be easily achieved. Each step will be described below.

### [Provision of raw material particle]

As raw material particles, core raw material particles and child particles for forming a covering portion are provided. As the core raw material particle, for example, a particle having an average particle diameter of 10 µm or more and 200 µm or less may be provided corresponding to the core particle of the desired latent heat storage particle. Even if the core raw material particle contain fine particles having a particle diameter of less than 10 µm, for example, fine particles collide with each other during hybridization, so that relatively large particles of, for example, about 30 µm can be obtained. The average particle diameter may be, for example, 100 µm or less, or 50 µm or less. The average particle diameter of the child particle is preferably 0.1 µm or more and 2 µm or less, and a ratio of (average particle diameter of child particle/average particle diameter of core raw material particle) is preferably 0.001 or more and 0.2 or less. The average particle diameter of the child particle may be 1.0 µm or less, and 0.4 µm or less. The component of the core raw material particle is the same as the component of the core particle of the latent heat storage particle, and is as described for the component of the core particle of the latent heat storage particle. The component of the child particle is the same as the component (particularly, the main component) of the covering portion of the latent heat storage particle, and is as described in the component of the covering portion of the latent heat storage particle. When heat treatment is performed at a temperature equal to or higher than the melting point of the component of the core raw material particle after hybridization, or when melting and solidification is repeatedly performed as in a repeated test performed in Examples, the component of the covering portion of the latent heat storage particle may be an oxide of the component of the child particle, and the component of the covering portion of the latent heat storage particle may include the oxide of the core raw material particle as described above.

As a mixing ratio of the core raw material particles and the child particles to be charged into an apparatus, a ratio of the child particles to the total of the core raw material particles and the child particles may be in a range of 10 vol% or more and 50 vol% or less.

Additives such as a binder and an antioxidant can be included as a third component other than the core raw material particles and the child particles. An allowable amount of the third component can be 40 vol% or less when the amount of the child particles is 100 vol%.

### [Hybridization of core raw material particle and child particle by high-speed airflow impact method]

In the present embodiment, the core raw material particles and the child particles for forming the covering portion are used, and the child particles are mechanically hit against the surface of the core raw material particles by a high-speed airflow impact method which is a dry mechanical method to obtain a latent heat storage particle in which the child particles are secured to the surface of the core raw material particle. The "securing" includes physical adhesion by a shape change of the child particle and the like, and adhesion by a chemical reaction between the core raw material particle and the child particle. A degree of securing is not limited as long as at least a part of the surface of the core particle is covered. The coverage of the covering portion on the surface of the core particle is preferably as high as possible, and as described above, is preferably 50 area% or more, more preferably 70 area% or more, still more preferably 80 area% or more, even more preferably 90 area% or more, and most preferably 100 area%.

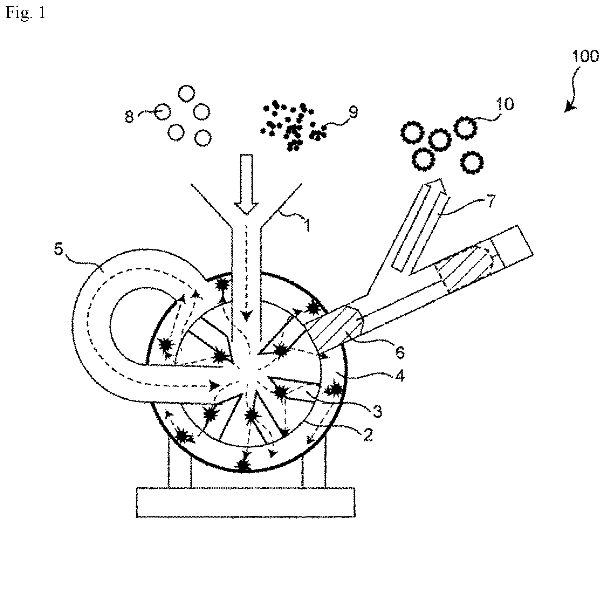

Hereinafter, the high-speed airflow impact method used in the manufacturing method according to the present embodiment will be described with reference to FIG. 1 schematically showing a high-speed airflow impact device; however, the present disclosure is not limited to such an embodiment.

Fig. 1 is a schematic sectional view of a high-speed airflow impact device 100 for carrying out hybridization by the high-speed airflow impact method. The high-speed airflow impact device 100 includes a raw material particle inlet 1, a rotor 2 that rotates at a high speed, a blade 3, a stator 4, a circulation circuit 5, a discharge valve 6, and a discharge port 7.

In the high-speed airflow impact method, first, core raw material particles 8 as powder and child particles 9 as fine powder are supplied from the sample inlet 1 to an impact chamber, the core raw material particles 8 and the child particles 9 in the impact chamber are scattered while rotating in the impact chamber at a high speed by the rotation of the rotor 2, and during this time, the child particles 9 collide with the surface of the core raw material particles 8. Some raw material particles enter the pipe from one connection port of the circulation circuit 5 connected to the collision chamber, circulate, and then are introduced into the collision chamber again from the other connection port. Collision treatment between the core raw material particles 8 and the child particles 9 can be repeatedly performed by the circulation circuit 5. By continuing collision by rotation for a certain period of time in this manner, the child particles 9 are secured to the surface of the core raw material particles 8, and in addition, the latent heat storage particles 10 formed by deformation or the like of the child particles 9 are obtained. During the collision between the core raw material particles 8 and the child particles 9, an introduction path to the discharge port 7 is closed by the discharge valve 6; however, after a certain period of time, the obtained latent heat storage particles 10 are discharged from the discharge port 7 to the outside of the device through the introduction path to the opened discharge port 7 by moving the discharge valve 6. Although not shown, a passage for cooling water may be provided so that the inside of the collision chamber does not have a high temperature, and the collision treatment may be performed while cooling by flowing the cooling water. According to the high-speed airflow impact method, it is possible to manufacture a latent heat storage particle of a combination of materials of the core raw material particles and the child particles, which have not been obtained conventionally. The latent heat storage particle can be obtained in a dry manner, there is no need to use an organic solvent and the like, and the latent heat storage particle can be obtained in a short time; therefore, the latent heat storage particle can be efficiently and stably manufactured.

A circumferential velocity of the rotor 2 in the above device may be, for example, in a range of 40 m/s or more and 100 m/s or less. The treatment time may be, for example, in a range of 1 to 120 minutes although it depends on the treatment amount. The treatment temperature can be, for example, in a range from room temperature to 70°C, and in a range from room temperature to 50°C. The pressure and atmosphere of the collision chamber are not particularly limited. The atmosphere of the collision chamber can be, for example, an inert gas atmosphere such as an Ar atmosphere.

In the latent heat storage particle obtained by the hybridization, the covering portion may be porous formed by aggregation of the child particles, and at least a part of the covering portion, for example, the outermost layer of the covering portion has a particle shape. As the latent heat storage particle according to the present embodiment, those obtained by the hybridization can be used, for example, for formation of a heat exchange material.

The latent heat storage particle according to the present embodiment do not require heat treatment (calcination) unlike the conventional latent heat storage particles. On the other hand, if necessary, for example, heat treatment may be performed for the purpose of reducing voids contained in the porous covering portion and forming a denser film as the covering portion. When the heat treatment is performed, the heat treatment may be performed under the following conditions.

### [Heat treatment (calcination) performed as necessary]

As heat treatment conditions, the temperature and atmosphere can be set according to the component of the core raw material particle and the desired covering portion. For example, the heat treatment may be performed at a temperature equal to or higher than the melting point of the latent heat storage material, and for example, heating may be performed at a temperature equal to or higher than 700°C according to the melting point of the component of the core raw material particle. By this heat treatment, the covering portion formed by the hybridization is oxidized, and for example, a stronger aluminum oxide film can be formed. The aluminum oxide film formed by the heat treatment has a crystal form of γ-Al₂O₃ at a relatively low temperature of about 800°C or lower, and a chemically stable α-Al₂O₃ film is obtained at a relatively high temperature of about 880°C or higher. In order to obtain a chemically stable α-Al₂O₃ film, the temperature of the heat treatment is preferably 880°C or higher. For example, the temperature of the heat treatment is preferably 880°C or higher and 1230°C or lower. When the core raw material particle is, for example, an Al-Si alloy, the heat treatment may be performed at a temperature of 900°C or higher and 1230°C or lower. On the other hand, when the core raw material particle is, for example, Sn, the core raw material particle burns at about 600°C in, for example, an oxidizing atmosphere, and thus the heat treatment may be performed at a temperature lower than 600°C.

The atmosphere of the heat treatment is not particularly limited. For example, an oxygen gas may be supplied to an air atmosphere or a heat treatment furnace to form an oxygen atmosphere. The temperature in the furnace is increased by a heater, and heat treatment (oxidation treatment) is performed, for example, for 3 to 5 hours from the time point when a temperature of a sample reaches a predetermined temperature, so that the latent heat storage particles after the heat treatment can be obtained. Specific examples of the heat treatment method include filling latent heat storage particles obtained by the hybridization in a crucible, placing the crucible on an upper portion of a thermocouple provided at a tip of an insertion rod, and setting the crucible in a heat treatment furnace equipped with a heater.

### EXAMPLES

Hereinafter, the present invention will be described more specifically with reference to Examples. The present disclosure is not limited by the following examples, and can be implemented with appropriate modifications within a range that can be consistent with the above-described and later-described gist, and any of them is included in the technical scope of the present invention.

### [Example 1]

In Example 1, core raw material particles containing Sn as a component and having the average particle diameter shown in Table 1 and child particles containing α-Al₂O₃ as a component and having an average particle diameter of 0.3 µm were provided such that the ratio (volume ratio) of the child particles to the total of the core raw material particles and the child particles was as shown in Table 1. Then, using a high-speed airflow impact device manufactured by NARA MACHINERY CO., LTD., under the conditions shown in Table 1, a treatment of causing the core raw material particles and the child particles to collide with each other by a high-speed airflow impact method was performed to obtain a sample (latent heat storage particle). In both Example 1-1 and Example 1-2, heat treatment after hybridization was not performed.

**[Table 1]**

| No. | Core raw material particle | | Child particle | | | Hybridization | | Heat treatment |
|---|---|---|---|---|---|---|---|---|
| | Component | Average particle diameter µm | Component | Average particle diameter µm | Volume ratio | Circumferential velocity | Treatment time | |
| 1-1 | Sn | 45 | α-Al₂O₃ | 0.3 | 20 vol% | 80 m/s | 3 min | Not occurred |
| 1-2 | Sn | 20-37 | α-Al₂O₃ | 0.3 | 40 vol% | 80 m/s | 3 min | Not occurred |

### (Repeated test (repeated durability test))

Using the sample of Example 1-1, a test in which melting and solidification were repeated 10 times or 100 times was performed. Specifically, in an air atmosphere, the temperature was maintained at 400°C for 1 hour and then returned to room temperature, and thereafter, as a first time, the temperature was raised to 400°C, held for 10 minutes, then lowered to 40°C, and held for 10 minutes. Then, for the second time, the temperature was again raised to 400°C, held for 10 minutes, then lowered to 40°C, and held for 10 minutes (both the temperature raising rate and the temperature lowering rate were 30°C/min), which was repeated 10 times in total or 100 times in total. SEM observation and XRD measurement of the sample before and after the 100 times repeated test, and DSC measurement before and after the 10 times repeated test were performed as follows.

### (SEM observation)

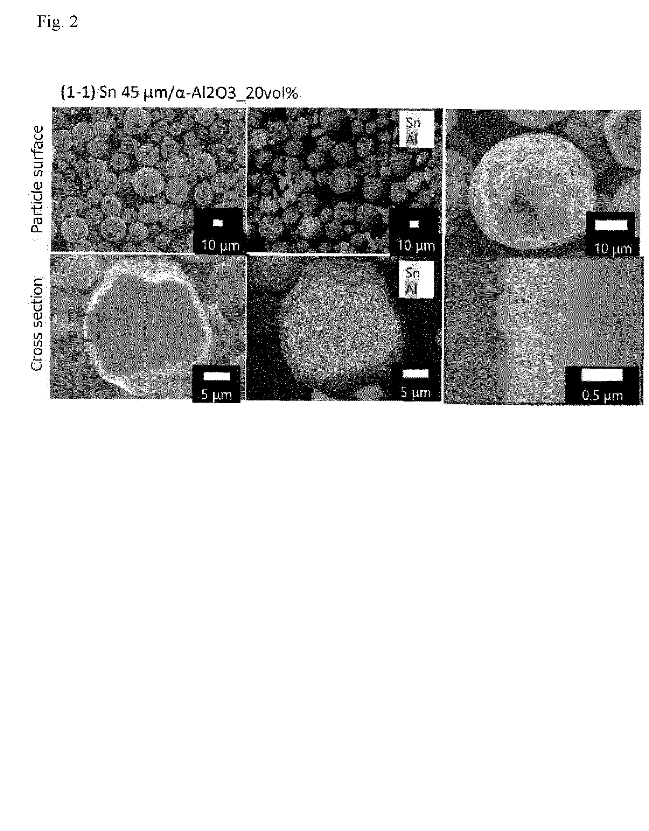

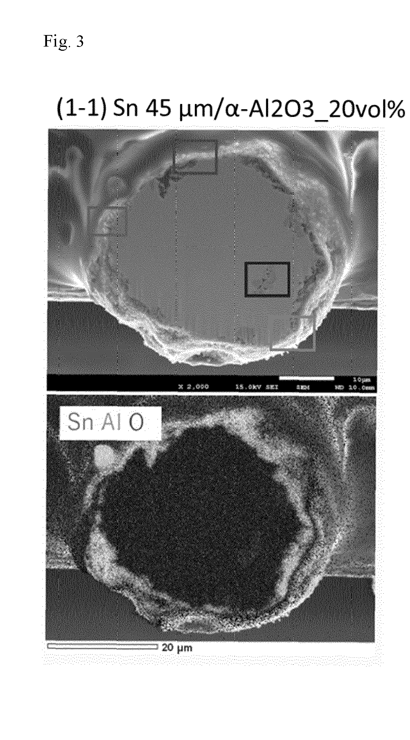

The appearance and cross section of the sample of Example 1-1 before the melting and solidification 100 times repeated test and the cross section after the 100 times repeated test were observed by SEM (JEOL, JSM-7001FA). The results are shown in Figs. 2 and 3, respectively. The dark gray Al in a center photograph of Fig. 2 is obtained by detecting Al contained in aluminum oxide. As is clear from Fig. 2, it was confirmed that the surface of the sample (latent heat storage particle) was almost covered with an aluminum oxide layer. A lower right photograph of Fig. 2 is an enlarged photograph of a region surrounded by a broken line in a lower left photograph of Fig. 2. As shown in the lower right photograph of Fig. 2, fine particles are deposited on an outer edge portion (outermost layer) of the covering portion, and it can be seen that at least a part of the covering portion has a particle shape. In addition, it was confirmed that Al was contained in this deposit. That is, it was confirmed that an Al₂O₃ layer (= shell) of about 500 nm was formed on the surface of the core particle by hybridization. In a lower diagram of Fig. 3, a black portion at the center indicates the detection of Sn, and a gray portion close to white around the black portion indicates the detection of Al and O. As is clear from the lower diagram of FIG. 3, Al and O were detected in the covering portion. From this, it is found that even after the test in which melting and solidification are repeated 100 times, a shell formed of Al₂O₃ exists, and leakage of PCM can be prevented.

### (XRD measurement)

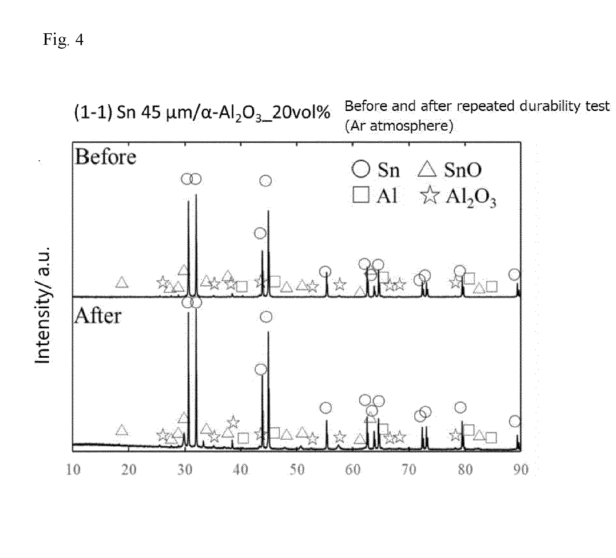

XRD measurement was performed under the following conditions using the sample of Example 1-1 before and after the melting and solidification 100 times repeated test. The results are shown in Fig. 4. Fig. 4 shows that the crystal structure is almost the same before and after the melting and solidification 100 times repeated test, and the crystal structure before the repeated test can be maintained even after the melting and solidification 100 times repeated test.

### (Measurement conditions)

- X-ray diffractometer: Rigaku MiniFlex 600
- X-ray source: Cu wire
- Detector: High-speed one-dimensional detector D/teX Ultra 2
- Tube voltage: 40 kV
- Tube current: 15 mA
- Scan speed: 1.0°/min
- Step: 0.01°

### (Differential scanning calorimetry (DSC))

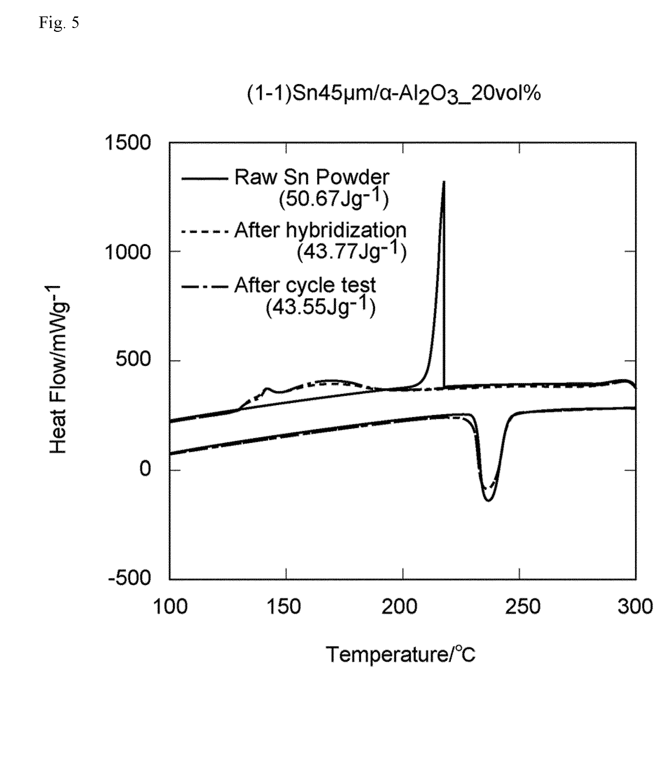

Using the sample of Example 1-1 before and after the melting and solidification 10 times repeated test, differential scanning calorimetry was performed at a temperature rising rate of 10°C/min in a range of 25 to 400°C under an Ar atmosphere using an alumina pan using a differential scanning calorimeter (model number TGA/DSC3+ manufactured by METTLER TOLEDO) to obtain a DSC curve. The results are shown in Fig. 5.

From Fig. 5, it was found that the sample of Example 1-1 held a latent heat amount of about 80% with respect to the raw material (Raw Sn Powder). Although a melting peak of the sample after hybridization is the same as the melting peak of an Sn powder raw material, a coagulation peak of the sample after hybridization is slightly shifted from the coagulation peak of the Sn powder raw material, and it can be seen that slight supercooling occurs. As described above, since a heat release starting temperature was lowered (subcooled), it was confirmed that encapsulation by hybridization was achieved. In addition, since the DSC curve is almost the same as the DSC curve after hybridization and does not change even after the melting and solidification 10 time repeated test, it is found that capsule breakage does not occur and the core-shell structure is maintained even after the melting and solidification 10 time repeated test.

### (Thermal durability test)

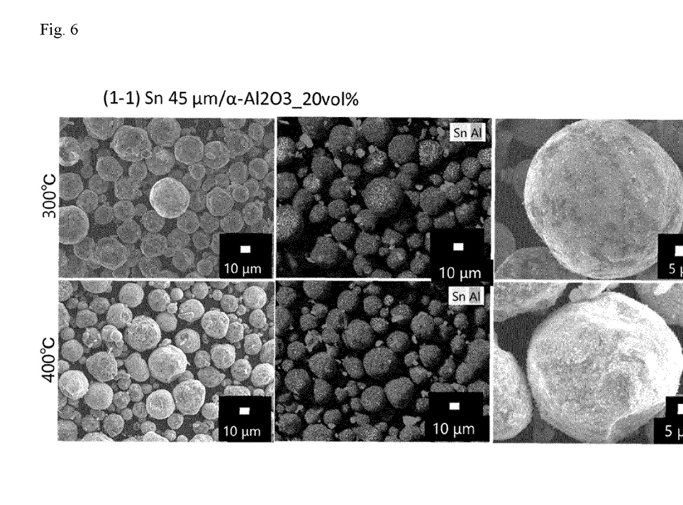

Using the sample of Example 1-1, a thermal durability test was performed in which under an Ar atmosphere, the temperature was raised to 300°C or 400°C higher than the melting point (232°C) of Sn contained in the core particles at a temperature raising rate of 10°C/min and then natural cooling was performed. Then, the appearance of the sample after the thermal durability test was observed by SEM. The results are shown in Fig. 6.

In Fig. 6, the upper part is a photograph of a sample heat-treated at 300°C, and the lower part is a photograph of a sample heat-treated at 400°C. In the upper and lower photographs in the middle of Fig. 6, dark gray on the particle surface indicates the detection of Al. From the photograph of Fig. 6, melting and expansion of the shell due to the heat treatment were not confirmed, and it was confirmed that the capsule structure was maintained without leakage of Sn and defects on the particle surface. From this, it can be seen that the latent heat storage particle according to the present embodiment has excellent thermal durability.

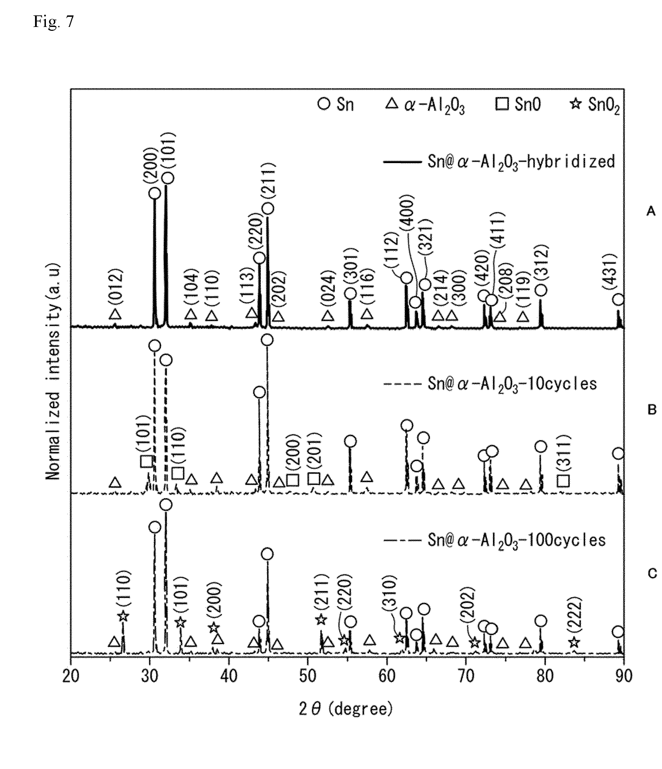

Using the sample of Example 1-1, the test was repeated 10 times in total or 100 times in total as described above. After hybridization and before the repeated test, after 10 times of the repeated test, and after 100 times of the repeated test, XRD measurement was performed under the above conditions. The results are shown in Fig. 7. In Fig. 7, A shows the results after hybridization and before the repeated test, B shows the results after 10 times of the repeated test, and C shows the results after 100 times of the repeated test.

From the results of Fig. 7, the oxidation of Sn proceeded as the number of repeated tests increased, a peak of SnO was confirmed at the 10th repeated test, and a peak of SnO₂ was confirmed at the 100th repeated test.

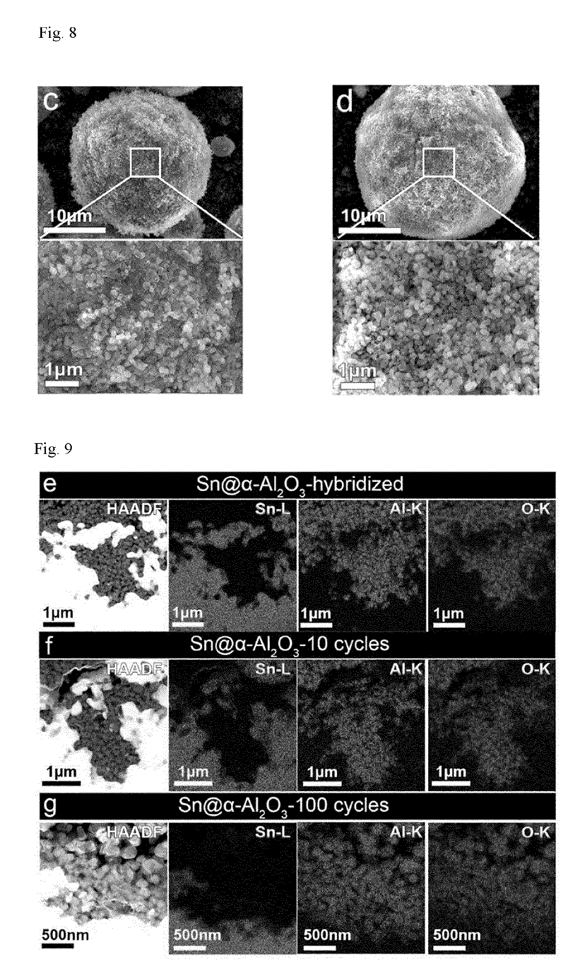

Using the sample of Example 1-1, SEM observation was performed in the same manner as described above. The obtained SEM photograph is shown in Fig. 8. The left of Fig. 8 is a photograph after hybridization and before the repeated test, and the right of Fig. 8 is a photograph after 100 times of the repeated test. In each of the left and right photographs of Fig. 8, the lower photograph is a photograph in which a white square frame of the upper photograph is enlarged. From the photograph of Fig. 8, it can be seen that the shape of Al₂O₃ particles included in the covering portion remains stable with almost no change even after 100 times of the repeated test.

Using the sample of Example 1-1, mapping analysis was performed using a scanning transmission electron microscope (STEM) equipped with an energy dispersive X-ray analyzer (EDS). The sample obtained in Example was thinned by a focused ion beam apparatus (JEOL Ltd., JEM-9320 FIB) to obtain a sample for STEM-EDS observation. As conditions for the thinning, an acceleration voltage was set to 30 kV, and a Ga liquid metal was used as an ion source. For the STEM-EDS observation, a transmission electron microscope (manufactured by JEOL Ltd., product number: JEM-ARM 200 F) equipped with an energy dispersive X-ray analyzer (manufactured by JEOL Ltd., product number: JED-2300 T) was used. As observation conditions, an acceleration voltage of 200 kV and a beam diameter of 1 nm in diameter were used. As a result of the observation, a STEM-EDS photograph of a boundary region between the core particle and the covering portion is shown in Fig. 9. In Fig. 9, photographs after hybridization and before the repeated test, after 10 times of the repeated test, and after 100 times of the repeated test are shown in order from the top. In each photograph, a HAADF (High-Angle Annular Dark Field) image, a Sn mapping image, an Al mapping image, and an O (oxygen) mapping image are illustrated in order from the left. From these images of Fig. 9, it can be seen that the covering portion is in a state where the component of the core particle is mixed with Al₂O₃ in the boundary region between the core particle and the covering portion.

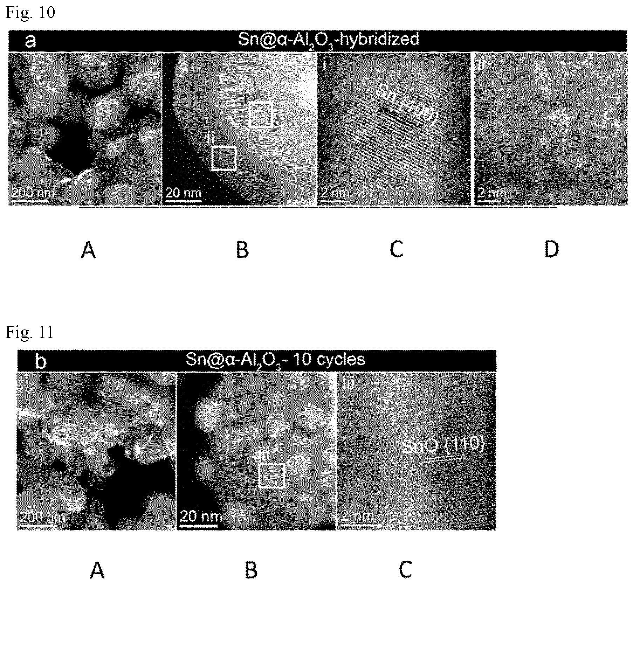

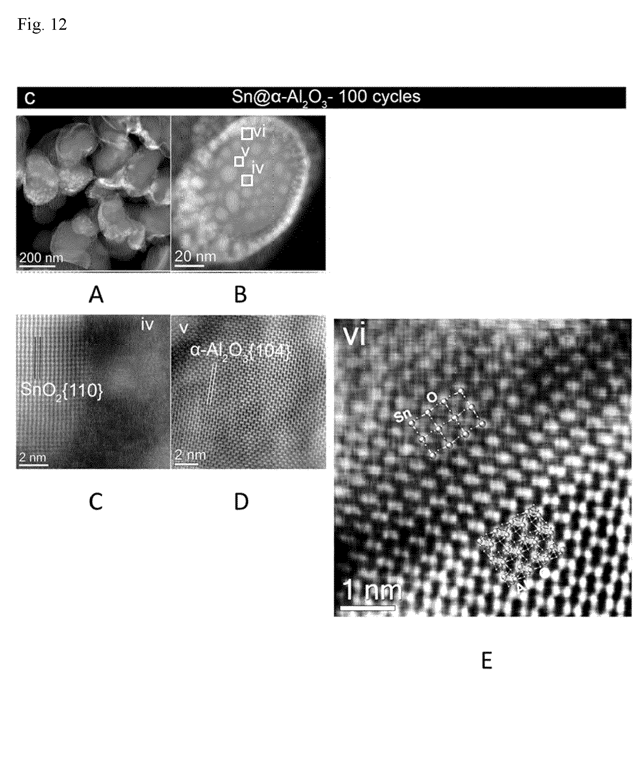

In addition, the particles included in the covering portion of the latent heat storage particle were observed. As a result, Fig. 10 shows a photograph after hybridization and before the repeated test, Fig. 11 shows a photograph after 10 times of the repeated test, and Fig. 12 shows a photograph after 100 times of the repeated test.

In Fig. 10, A is a photograph of a plurality of particles included in the covering portion of the latent heat storage particle, B is a cross-sectional photograph of one particle included in the covering portion, C is an enlarged photograph of i in the photograph of B, and D is an enlarged photograph of ii in the photograph of B. From B to D of Fig. 10, the particles included in the covering portion included a light gray interior and a dark gray layer as shown in B, the dark gray layer was amorphous as shown in D, a plurality of white lumps as shown in i of the photograph of B were observed in the light gray interior, and the white lumps as shown in i were Sn as shown in the photograph of C. That is, it was found that the particles included in the covering portion were Al₂O₃ particles containing metal Sn therein.

In Fig. 11, A is a photograph of the plurality of particles included in the covering portion of the latent heat storage particle, B is an appearance photograph of one of the plurality of particles, and C is an enlarged photograph of iii in B. From these photographs, it can be seen that after 10 times of the repeated test, a large number of SnO represented by gray close to white in B exist on the surface of the particles included in the covering portion.

In addition, in Fig. 12, A is a photograph of the plurality of particles included in the covering portion of the latent heat storage particle, B is a cross-sectional photograph of one particle included in the covering portion, and C to E are enlarged photographs of iv to vi in the photograph of B. From these photographs, it can be seen that, after 100 times of the repeated test, in the cross-sectional photograph of one particle included in the covering portion in B, SnO₂ of iv represented by gray close to white is present in α-Al₂O₃ of v represented by light gray inside the particle. It is found that the crystal structures of Sn oxide and Al oxide exist in vi in the vicinity of the surface of the particles included in the covering portion.

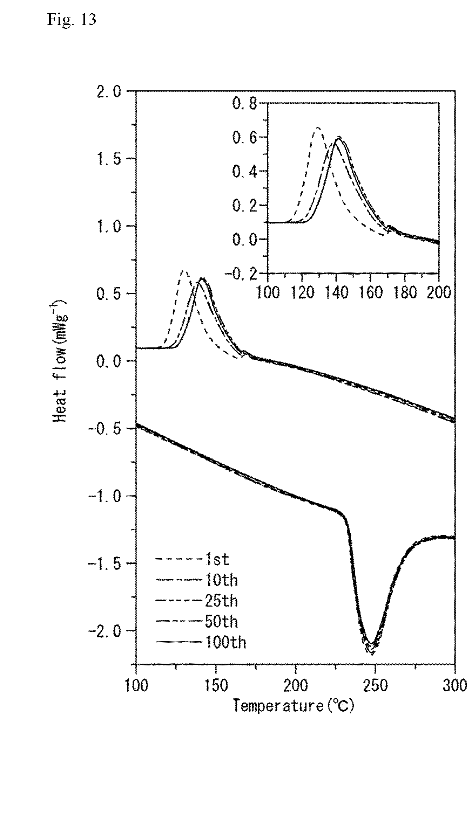

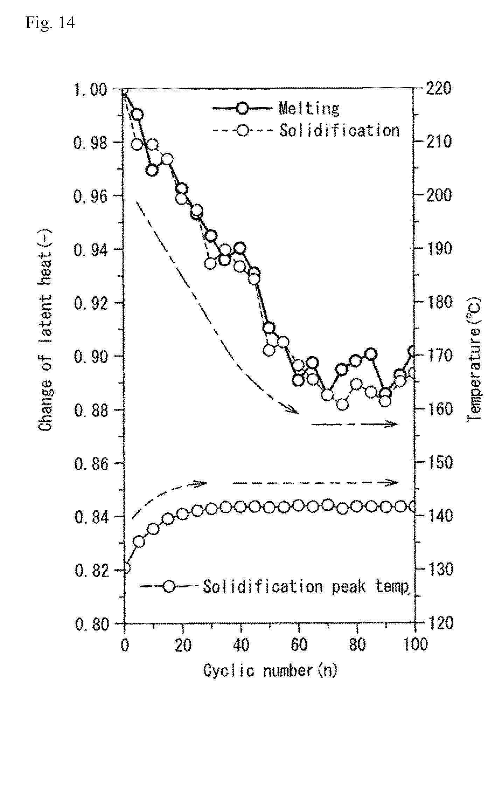

Using the sample of Example 1-1, an influence of the number of repeated tests on the differential scanning calorimetry result was examined. As a result, the results of differential scanning calorimetry after 1 time, 10 times, 25 times, 50 times, and 100 times of the repeated test are shown in Fig. 13. Fig. 14 shows changes in latent heat quantity with respect to the number of repeated tests during melting and solidification, and also shows a transition of a solidification peak temperature.

The following can be seen from the observation results and measurement results in Figs. 7 to 14. First, it is found that, on the surface of the latent heat storage particle, an Sn particle as the core particle is not densely covered with α-Al₂O₃ included in the covering portion, and Sn exposed portions of the core particle are interspersed, and Sn as the component of the core particle enters α-Al₂O₃ included in the covering portion. This is presumed to be because when the latent heat storage particles according to the present embodiment are manufactured by hybridization, α-Al₂O₃ particles as child particles collide with Sn particles as the core raw material particles, and adhesion of Sn to the α-Al₂O₃ particles is repeated. It is considered that Sn in the α-Al₂O₃ is oxidized to form SnO by the repeated test. In addition, it is considered that as the number of repeated tests increases, oxidation proceeds, and SnO₂ is present. For the above phenomenon, it is considered that a similar phenomenon is observed also in the latent heat storage particle obtained by performing heat treatment after hybridization instead of the repeated test.

In Fig. 14, the latent heat amount is substantially constant after 60 times of the repeated test. This is considered to be because, for example, although Sn contained in the core particle is consumed as an oxide due to an increase in the number of repeated tests at a portion where the Sn exposed portions of the core particle are interspersed, as the number of repeated tests increases, Sn oxide increases in the boundary region between the core particle and the covering portion, and this acts as an antioxidant layer to stop oxidation of Sn, so that the latent heat amount is stabilized.

### [Example 2]

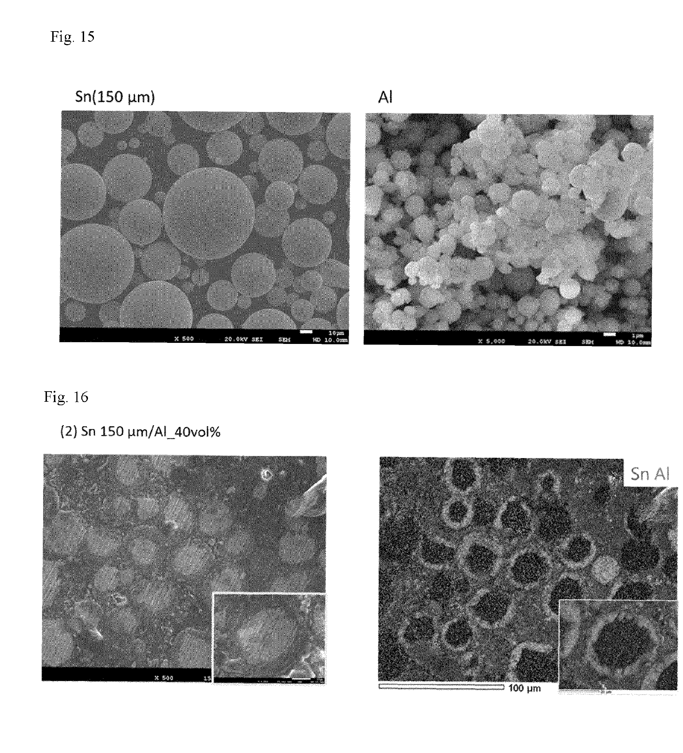

In Example 2, core raw material particles containing Sn as a component and having an average particle diameter of 150 µm and child particles containing Al as a component and having an average particle diameter of 2 µm were provided at such a blending ratio that the ratio of the child particles to all raw material particles was 40 vol% (volume%). An appearance photograph of these raw material particles is shown in Fig. 15. These raw material particles were charged into the high-speed air flow impact device in the same manner as in Example 1, and hybridization was performed in which Al child particles collided with Sn core raw material particles by the high-speed air flow impact method under the conditions of a circumferential velocity of 80 m/s and a treatment time of 3 minutes to obtain a sample. In Example 2, heat treatment after hybridization was not performed.

### (SEM observation after hybridization)

A cross section of the sample (latent heat storage particle) after hybridization was observed by SEM (JEOL, JSM-7001FA), and EDS analysis (energy dispersive X-ray spectroscopy) was also performed. The results are shown in Fig. 16. In the EDS analysis result on the right side of Fig. 16, a gray portion close to black at the center of each particle indicates the detection of Sn, and a shell-like light gray portion surrounding the periphery indicates the detection of Al. From Fig. 16, similarly to the case of using Al₂O₃ as the child particle in Example 1, it has been found that encapsulation can be performed also in the case of using Al as the child particle, and latent heat storage particles of microorder can be produced.

### (Repeated test (repeated durability test))

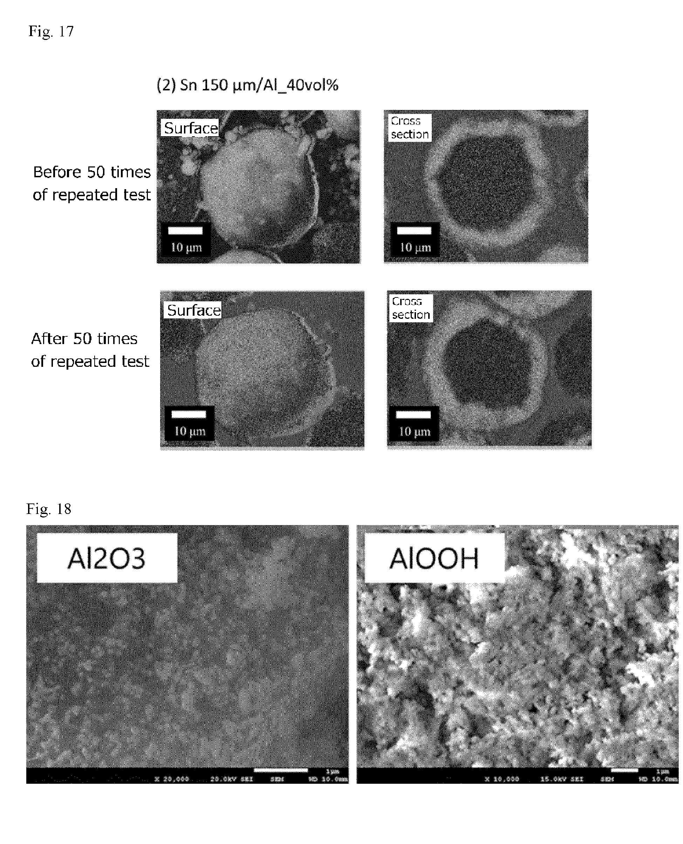

Using the sample of Example 2, a melting and solidification repetition test was performed in the same manner as in Example 1 except that the number of repetitions was set to 50. Then, EDS analysis of the appearance and cross section of the sample (latent heat storage particle) before and after the melting and solidification 50 time repeated test was performed. The results are shown in Fig. 17.

In the EDS analysis result on the right side of Fig. 17, a gray portion close to black at the center of each particle indicates the detection of Sn, and a shell-like light gray portion surrounding the periphery indicates the detection of Al. From Fig. 17, it can be seen that from the photograph of the sample (latent heat storage particle) before the melting and solidification 50 time repeated test and the photograph of Fig. 16, Al fine particles are secured to the surface of the obtained sample (latent heat storage particle) to form a "layered" shell. In addition, Al is detected in a shell portion, Sn is detected in a core portion, and it is found that a Sn-Al core-shell structure is formed. Furthermore, it is found that this structure is maintained even after the melting and solidification 50 time repeated test. The reason why the "layered" shell could be formed on the surface of the core particle as described above was considered that after the Al child particles were secured to the surface of the core particle, the Al child particles secured to the surface were crushed by the impact of collision of other Al child particles one after another to form the layered shell. In Example 2, although the core particle having a slightly large size was used, even in this case, it was found that the shell could be uniformly formed on the surface of the core particle by adjusting the treatment conditions such as the ratio of the child particles to the core particle.

### [Example 3]

In Example 3, Al-25 mass% Si having an average particle diameter of 20 to 37 µm was used as the core particle, and various Al compounds shown in Table 2 were used as the child particles. Hybridization was performed in the same manner as in Example 1 under the conditions of the following Table 2 to obtain a sample. After hybridization, heat treatment was performed under the conditions shown in Table 2.

**[Table 2]**

| No. | Core raw material particle | | Child particle | | | Hybridization | | Heat treatment |
|---|---|---|---|---|---|---|---|---|
| | Component | Average particle diameter µm | Component | Average particle diameter µm | Volume ratio | Circumferential velocity | Treatment time | |
| 3-1 | Al-25 mass% Si | 20-37 | α-Al₂O₃ | 0.3 | 20 vol% | 80 m/s | 3 min | 1000°C or 1150°C, O2, 3 h |
| 3-2 | Al-25 mass% Si | 20-37 | AlOOH | 0.7 | 20 vol% | 80 m/s | 3 min | 1000°C or 1150°C, O2, 3 h |
| 3-3 | Al-25 mass% Si | 20-37 | Al (OH)3 | - | 20 vol% | 80 m/s | 3 min | 1000°C or 1150°C, O2, 3 h |

### (SEM observation before and after heat treatment)

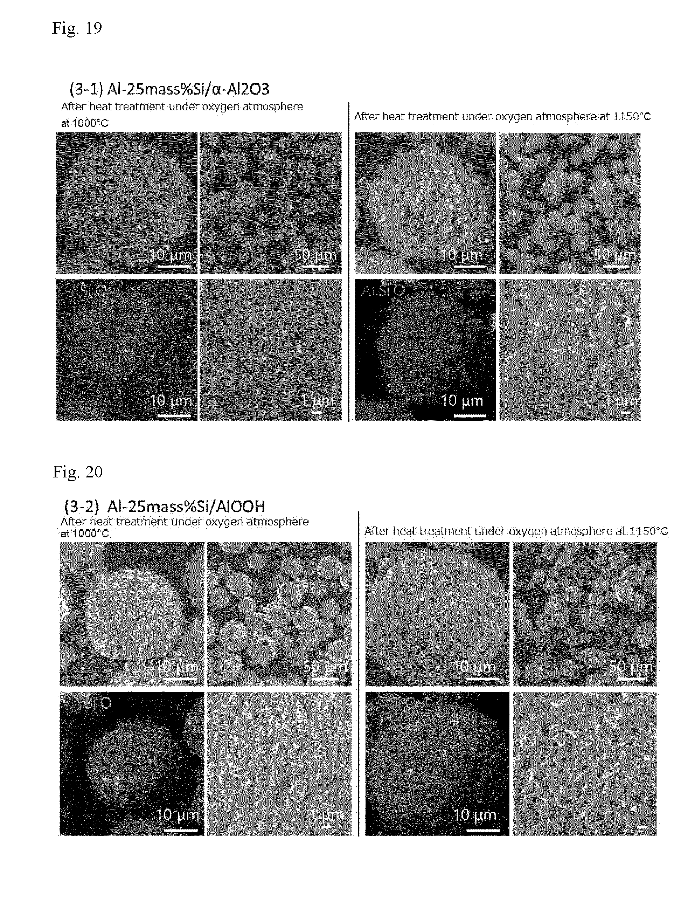

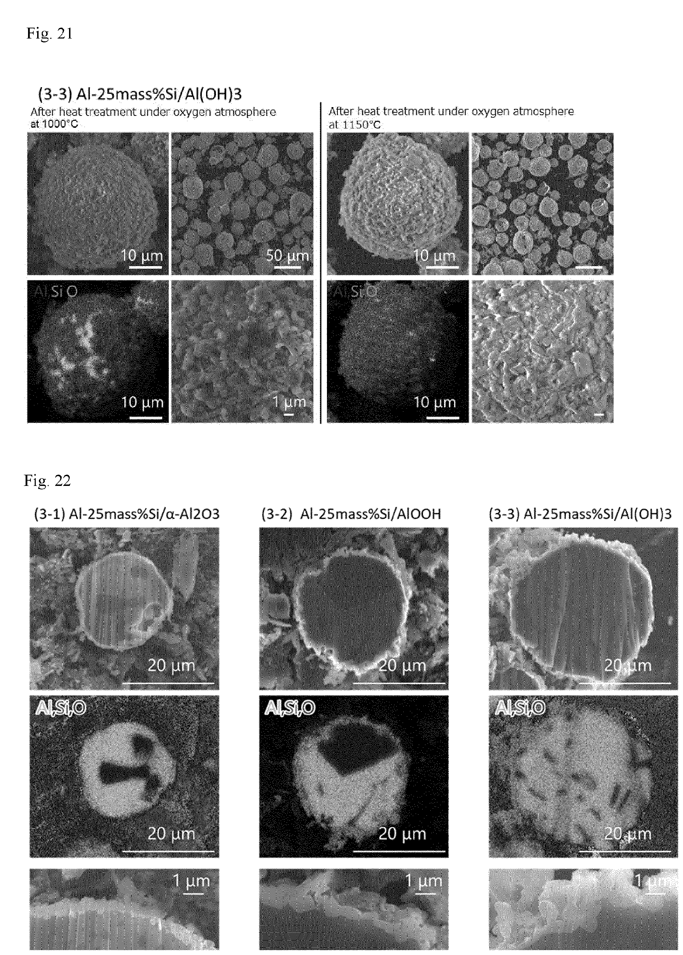

The appearance of the latent heat storage particle before and after heat treatment was observed by SEM (JEOL, JSM-7001FA), and EDS analysis was also performed. As a result, a SEM micrograph of the sample before the heat treatment (the child particles are α-Al₂O₃ and AlOOH) is shown in Fig. 18, a SEM micrograph of the appearance of the sample after the heat treatment (the child particles are α-Al₂O₃) and the EDS analysis result are shown in Fig. 19, a SEM micrograph of the appearance of the sample after the heat treatment (the child particles are α-AlOOH) and the EDS analysis result are shown in Fig. 20, and a SEM micrograph of the appearance of the sample after the heat treatment (the child particles are Al(OH)₃) and the EDS analysis result are shown in Fig. 21. Fig. 22 shows SEM micrographs and EDS analysis results of cross sections of the samples after the heat treatment at 1000°C. In each of these photographs of Figs. 19 to 21, the lower left photograph among the four photographs shown for each temperature shows the EDS analysis result, where dark gray indicates the detection of Al, and gray not covered with dark gray but close to white indicates the detection of Sn. In the EDS analysis results in each middle stage of Fig. 22, gray close to black in the particle cross section indicates the detection of Si, light gray around the gray indicates the detection of Al, and a gray portion on the particle surface indicates the detection of Al and O. From these photographs, it is found that the covering portion containing Al is uniformly formed on the surface of the core particle with almost no gap before and after the heat treatment. It can be seen from the photographs of the lower stages of Fig. 22 that an aggregate of particles derived from the child particles is formed on the surface of the covering portion, and at least a part of the covering portion has a particle shape.

### (XRD measurement after heat treatment)

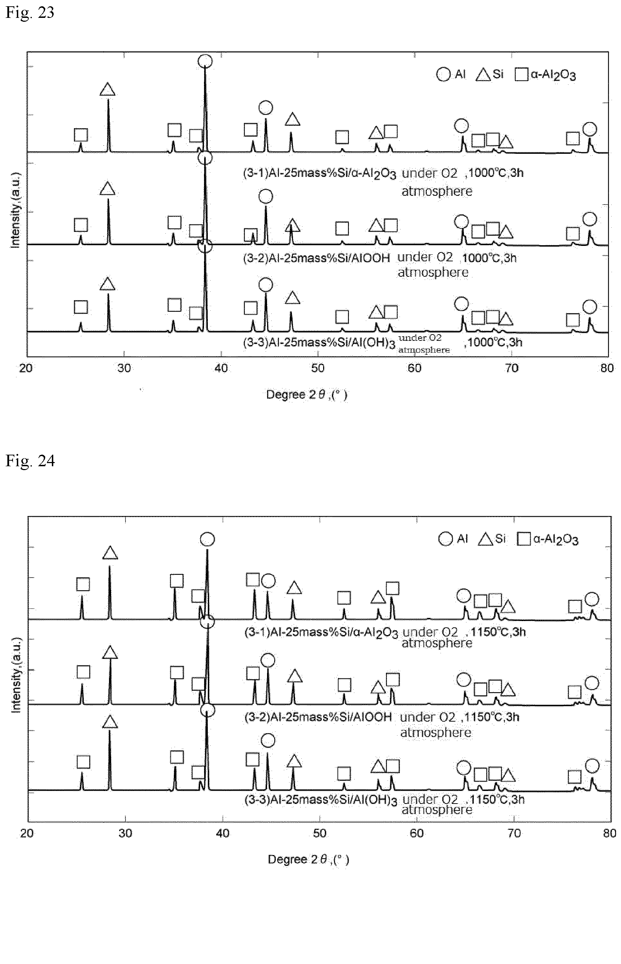

The XRD measurement of the latent heat storage particle after heat treatment was performed in the same manner as in Example 1. The results for the sample heat-treated at 1000°C are shown in Fig. 23, and the results for the sample heat-treated at 1150°C are shown in Fig. 24. From these figures, it was found that the core portion was formed of Al-Si and α-Al₂O₃ was formed in the covering portion in any sample after heat treatment at a high temperature.

### (DSC measurement after heat treatment)

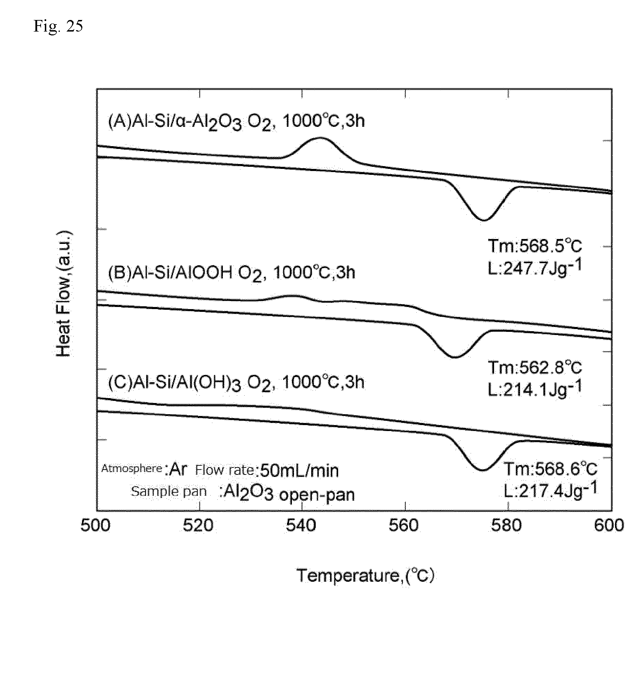

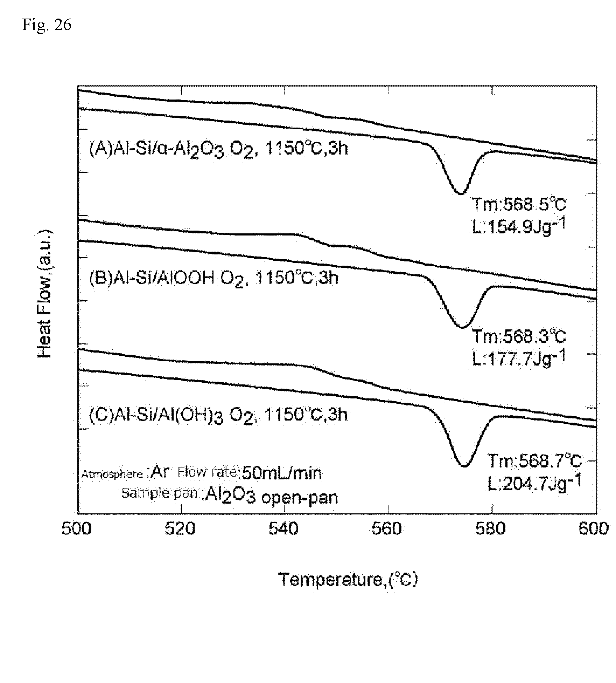

DSC measurement of the latent heat storage particle after the heat treatment was performed in the same manner as in Example 1. The results for the sample heat-treated at 1000°C are shown in Fig. 25. From this figure, it can be seen that any sample after the heat treatment at a high temperature maintains a high latent heat amount of 200 J/g or more, and is useful as a high-density heat-storing body. Fig. 26 shows the sample heat-treated at 1150°C. From this figure, even after the heat treatment at a higher temperature, all samples showed a high latent heat amount of 150 J/g or more.

### (SEM observation after repeated test)

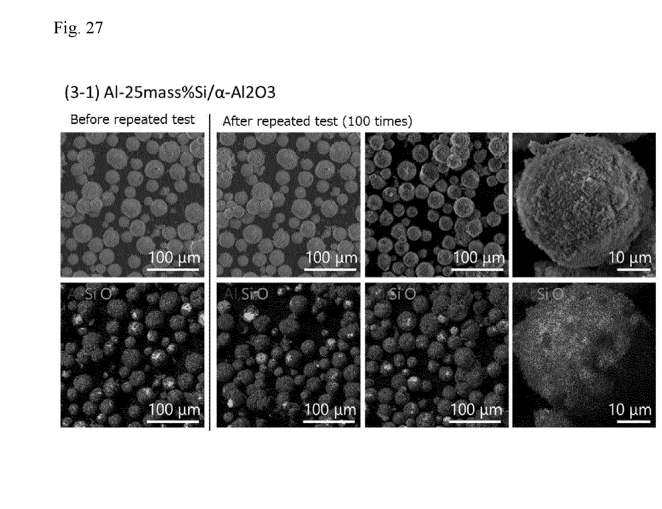

The repeated test was performed 100 times in the same manner as in Example 1 except that the latent heat storage particles of Example 3-1 using α-Al₂O₃ as the child particles were used and the atmosphere was an oxygen atmosphere having an oxygen concentration of 21%. The appearance of the latent heat storage particle before and after the repeated test was observed by SEM (JEOL, JSM-7001FA), and EDS analysis was also performed. As a result, photographs before and after the repeated test are shown in Fig. 27. In the EDS analysis results shown in the lower stage of Fig. 27, dark gray on each particle surface indicates the detection of Al, and gray close to white observed in some particles indicates the detection of Sn. From Fig. 27, it was confirmed that there was almost no change in both appearance and components even when the repeated test was performed, the PCM did not leak, the shape was maintained, and high durability was exhibited.

### [Example 4]

In Example 4, Zn-10 mass% Al having a particle diameter of 10 µm or more and less than 38 µm undersize was used as the core particles, and AIOOH was used as the child particles at various volume ratios shown in Table 3. The total amount of the core particles and the child particles was 30 g. Hybridization was performed in the same manner as in Example 1 under the conditions of the following Table 3. The circumferential velocity of 80 m/s in Table 3 corresponds to 13000 rpm. The atmosphere of the collision chamber of the high-speed airflow impact device used for hybridization was an Ar atmosphere. After hybridization, heat treatment was performed under the conditions shown in Table 3 to obtain a sample. The temperature rise and cooling from room temperature to the temperature of the heat treatment shown in Table 3 were 50°C/min.

**[Table 3]**

| No. | Core raw material particle | | Child particle | | | Hybridization | | Heat treatment |
|---|---|---|---|---|---|---|---|---|
| | Component | Particle diameter µm | Component | Average particle diameter µm | Volume ratio | Circumferential velocity | Treatment time | |
| 4-1 | Zn-10 mass% Al | -38 | AlOOH | 0.7 | 40 vol% | 80 m/s | 3 min | 800°C, O2, 3 h |
| 4-2 | Zn-10 mass% Al | -38 | AlOOH | 0.7 | 30 vol% | 80 m/s | 3 min | 800°C, O2, 3 h |
| 4-3 | Zn-10 mass% Al | -38 | AlOOH | 0.7 | 20 vol% | 80 m/s | 3 min | 800°C, O2, 3 h |

### (Repeated test (repeated durability test))

Using the samples of Examples 4-1 and 4-3, a test in which melting and solidification were repeated 300 times was performed. Specifically, the temperature was raised from room temperature to 250°C at 50°C/min in an air atmosphere, and held at 250°C for 10 minutes, and then, as a first time, the temperature was raised from 250°C to 500°C, held at 500°C for 2 minutes, then lowered to 250°C, and held for 2 minutes. Then, for the second time, the temperature was again raised from 250°C to 500°C, held at 500°C for 2 minutes, then lowered to 250°C, and held for 2 minutes (both the temperature raising rate and the temperature lowering rate were 50°C/min), which was repeated 300 times in total.

### (SEM observation before and after heat treatment and after repeated test)

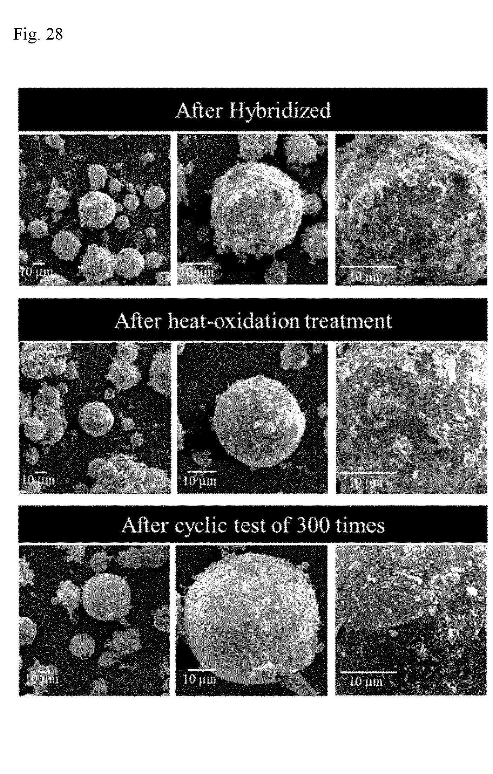

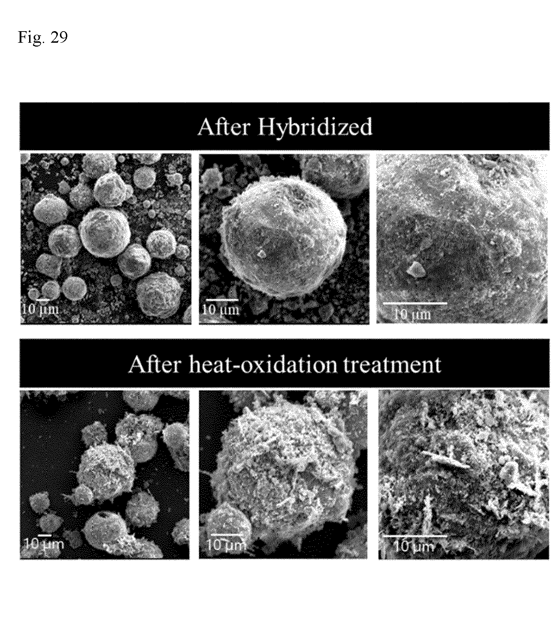

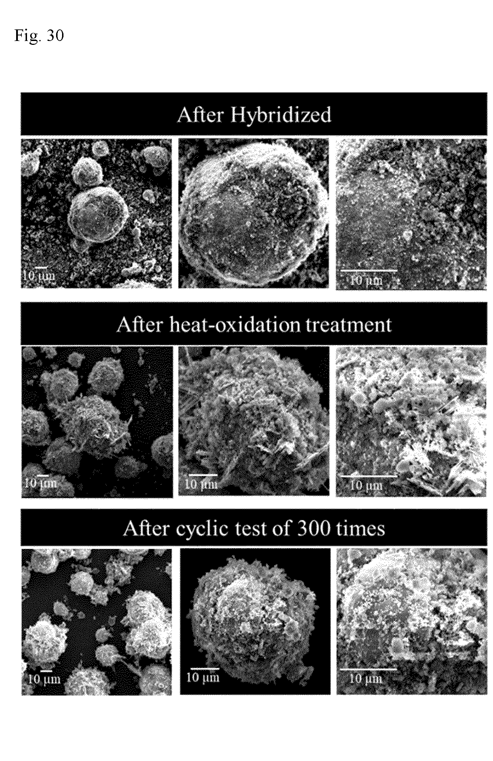

The appearance of the latent heat storage particle before and after the heat treatment and after the repeated test was observed with a scanning electron microscope (SEM, manufactured by JEOL Ltd., product number: JSM-7001FA). As a result, Fig. 28 shows an SEM micrograph of a sample in which the volume ratio of the child particles is 20 vol%, Fig. 29 shows an SEM micrograph of a sample in which the volume ratio of the child particles is 30 vol%, and Fig. 30 shows an SEM micrograph of the sample in which the volume ratio of the child particles is 40 vol%. In the present Example, "After Hybridixed" in the drawings indicates the results of the sample after hybridization and before heat treatment, "After heat-oxidation treatment" indicates the results of the sample after heat treatment and not subjected to the repeated test, and "After cyclic test of 300 times" indicates the results of the sample after the repeated test. The same applies hereinafter.

### (DSC measurement before and after repeated test)

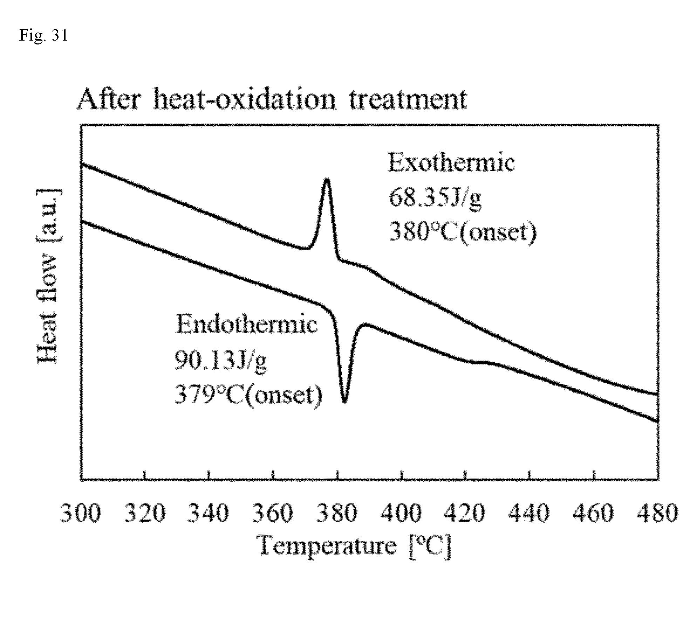

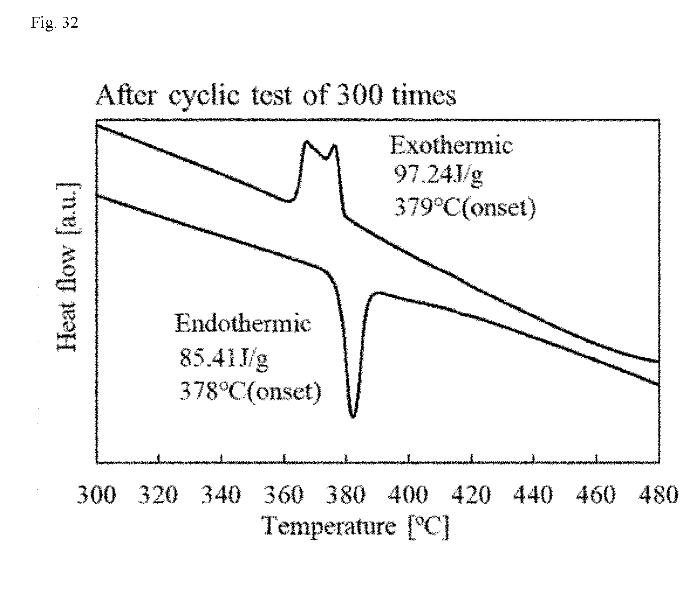

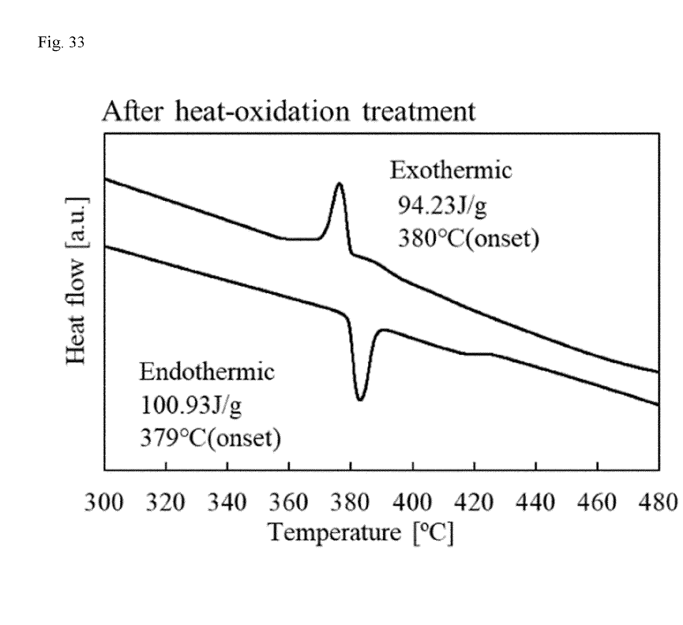

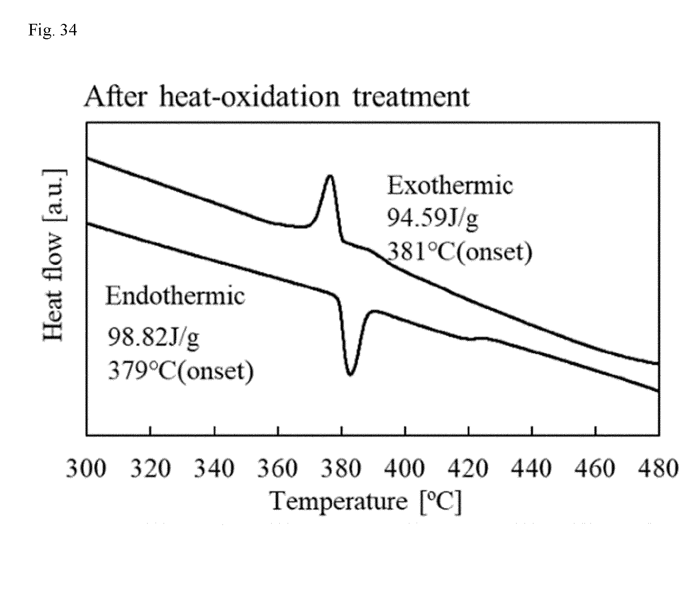

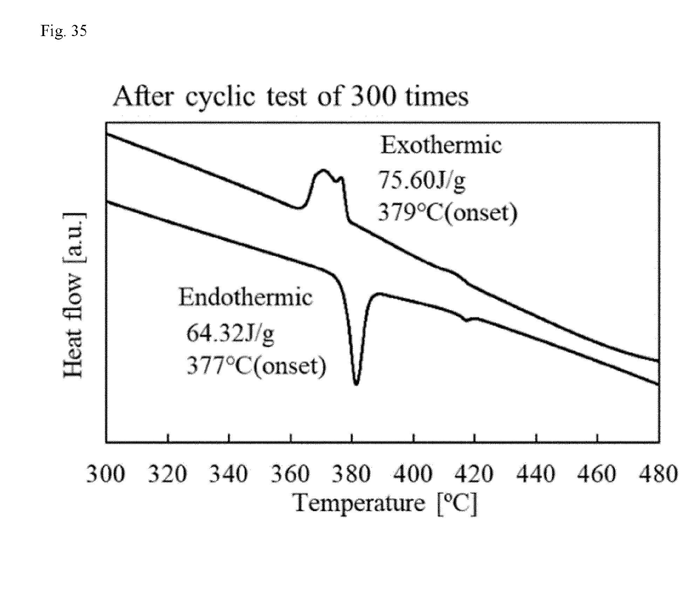

DSC measurement of the sample before and after the repeated test was performed in the same manner as in Example 1. As a result, Fig. 31 shows the DSC measurement result (after heat treatment) of the sample in which the volume ratio of the child particles is 20 vol%, Fig. 32 shows the DSC measurement result (after 300 times of the repeated test) of the sample in which the volume ratio of the child particles is 20 vol%, Fig. 33 shows the DSC measurement result (after heat treatment) of the sample in which the volume ratio of the child particles is 30 vol%, Fig. 34 shows the DSC measurement result (after heat treatment) of the sample in which the volume ratio of the child particles is 40 vol%, and Fig. 35 shows the DSC measurement result (after 300 times of the repeated test) of the sample in which the volume ratio of the child particles is 40 vol%.

From these figures, it is found that all the samples in which the Zn alloy having a melting point of about 380°C is encapsulated exhibits the same characteristics after the repeated test as those before the repeated test.

### [Example 5]

In Example 5, as shown in Table 4, Al-26.5 mass% Cu-5.4 mass% Si having an average particle diameter of 25 to 38 µm was used as the core particles, and α-Al₂O₃ was used as the child particles. The total amount of the core particles (15.37 g) and the child particles (4.63 g) was 20 g. Hybridization was performed in the same manner as in Example 1 under the conditions of the following Table 4. The atmosphere of the collision chamber of the high-speed airflow impact device used for hybridization was an Ar atmosphere. After hybridization, heat treatment was performed under the conditions shown in Table 4 to obtain a sample. The temperature rise from room temperature to the temperature of the heat treatment shown in Table 4 was 10°C/min.

**[Table 4]**

| No. | Core raw material particle | | Child particle | | | Hybridization | | Heat treatment |
|---|---|---|---|---|---|---|---|---|
| | Component | Average particle diameter µm | Component | Average particle diameter µm | Volume ratio | Circumferential velocity | Treatment time | |
| 5-1 | Al-26.5 mass% | 25-38 | α-Al2O3 | 0.3 | 20 vol% | 80 m/s | 3 min | 1000°C, O2, 3 h |
| | Cu-5.4 mass% Si | | | | | | | |

### (Repeated test (repeated durability test))

Using the sample of Example 5-1, a test in which melting and solidification were repeated 100 times was performed. Specifically, after preparing the sample, the sample was cooled from 1000°C to 300°C at 50°C/min in an air atmosphere, and held at 300°C for 10 minutes, then the temperature was returned to room temperature, and then, as a first time, the temperature was raised from 300°C to 650°C, held at 650°C for 2 minutes, then lowered to 300°C, and held for 2 minutes. Then, for the second time, the temperature was again raised from 300°C to 650°C, held at 650°C for 2 minutes, then lowered to 300°C, and held for 2 minutes (both the temperature raising rate and the temperature lowering rate were 50°C/min), which was repeated 100 times in total.

### (SEM observation before and after heat treatment and after repeated test)

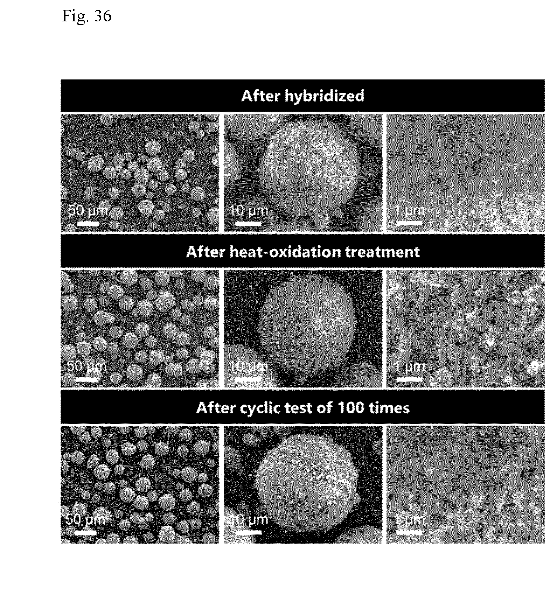

The appearance of the latent heat storage particle before and after heat treatment and after the repeated test was observed by SEM (JEOL, JSM-7001FA). The results are shown in Fig. 36.

### (DSC measurement before and after repeated test)

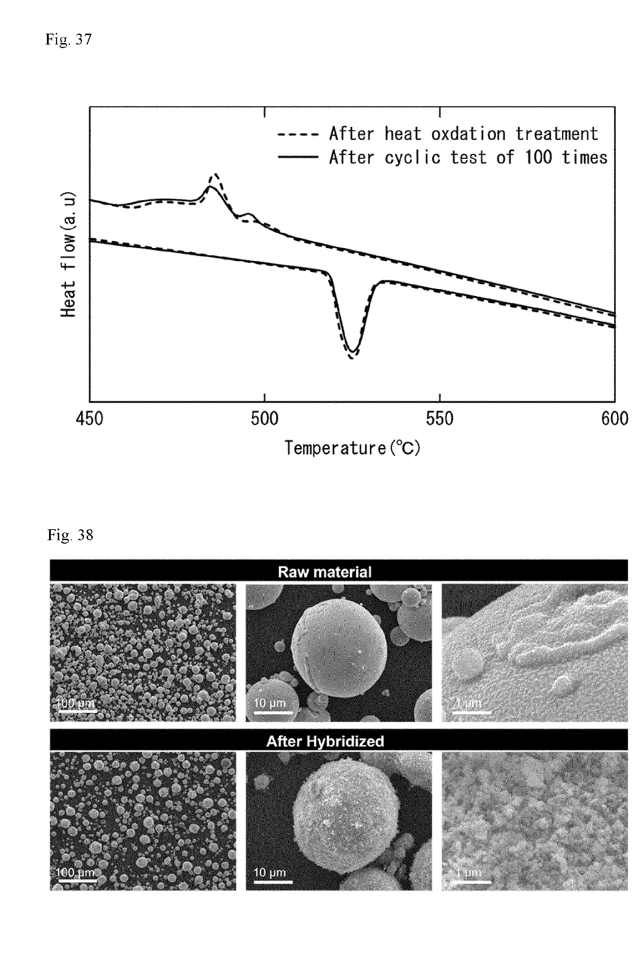

DSC measurement of the sample before and after the repeated test was performed in the same manner as in Example 1. The results are shown in Fig. 37. In Fig. 37, the results of the sample that has not been subjected to the repeated test after the heat treatment and the sample that has been subjected to 100 times repeated test are shown together. In Fig. 37, a heat of melting ΔH of the latent heat storage particle after the heat treatment was 291 J/g, and the heat of melting ΔH of the latent heat storage particle after the repeated test was 300 J/g. Furthermore, a heat of solidification ΔH of the latent heat storage particle after the heat treatment was 286 J/g, and the heat of solidification ΔH of the latent heat storage particle after the repeated test was 281 J/g.

From these figures, it is found that the sample in which the Al alloy having a melting point of about 525°C is encapsulated exhibits the same surface properties and characteristics as those before the repeated test even after the repeated test.

### [Example 6]

In Example 6, as shown in Table 5, Sn-9 mass% Zn of less than 45 µm undersize was used as the core particles, and α-Al₂O₃ was used as the child particles. The total amount of the core particles (26.46 g) and the child particles (3.54 g) was 30 g. Hybridization was performed in the same manner as in Example 1 under the conditions of the following Table 5 to obtain a sample. The atmosphere of the collision chamber of the high-speed airflow impact device used for hybridization was an Ar atmosphere. In Example 6, heat treatment after hybridization was not performed.

**[Table 5]**

| No. | Core raw material particle | | Child particle | | | Hybridization | |
|---|---|---|---|---|---|---|---|
| | Component | Particle diameter µm | Component | Average particle diameter µm | Volume ratio | Circumferential velocity | Treatment time |
| 6-1 | Sn-9 mass% Zn | -45 | α-Al2O3 | 0.3 | 20 vol% | 80 m/s | 3 min |

### (Raw material (core particle) and SEM observation after hybridization)

The appearance of the raw material (core particle) and the sample after hybridization was observed by SEM (JEOL, JSM-7001FA). The results are shown in Fig. 38. In Fig. 38, "Raw material" in the upper stage is a SEM observation photograph of the raw material (core particle).

### (Raw material (core particle) and DSC measurement after hybridization)

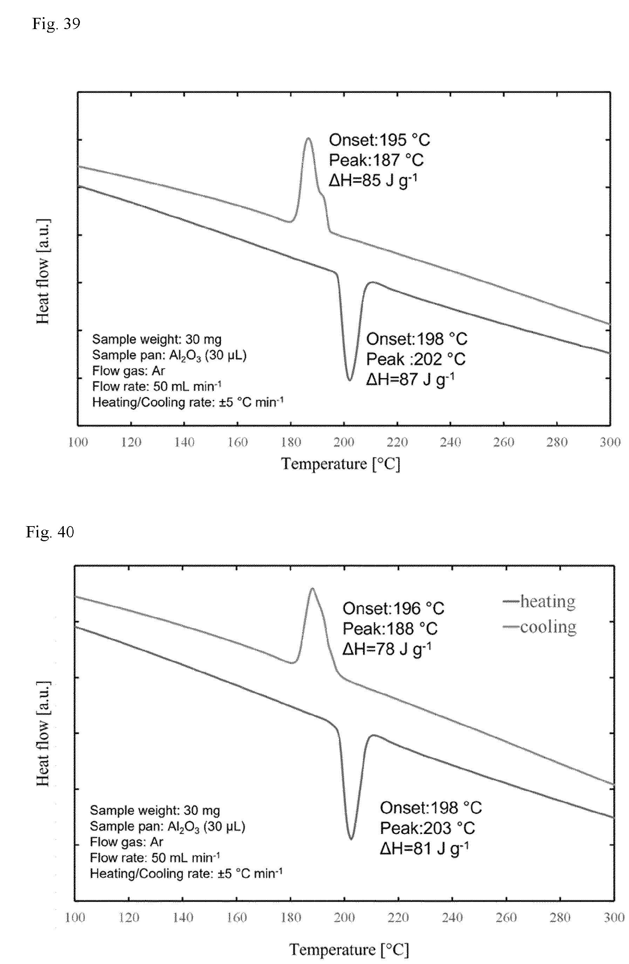

DSC measurement of the raw material (core particle) and the sample after hybridization was performed in the same manner as in Example 1. As a result, Fig. 39 shows the DSC measurement result of the raw material, and Fig. 40 shows the DSC measurement result of the sample after hybridization.

From these figures, it can be seen that the sample after hybridization has the same characteristics as the raw material (core particle).

As shown in the above Examples, according to the present disclosure, microencapsulation of metal PCM not containing Al or containing an element other than Al as a main component could be achieved. Further, it has been possible to achieve a micro-order latent heat storage particle in which the covering portion is formed of metal or ceramics other than Al₂O₃, which has not been realized so far. Furthermore, microencapsulation of the Al alloy PCM could be performed more easily.

The present application claims priority based on Japanese Patent Application No. 2021-145531. The disclosure of Japanese Patent Application No. 2021-145531 is incorporated by reference herein.

### EXPLANATION OF REFERENCES

- 1: Raw material particle inlet
- 2: Rotor
- 3: Blade
- 4: Stator
- 5: Circulation circuit
- 6: Discharge valve
- 7: Discharge port
- 8: Core raw material particle
- 9: Child particle
- 10: Latent heat storage particle
- 100: High-speed airflow impact device

## Claims

1. A latent heat storage particle comprising:
a core particle; and
a covering portion covering at least a part of a surface of the core particle,
wherein a component of the core particle is an element selected from the group consisting of Al, Mg, Si, Ti, Fe, Ni, Cu, Zn, Sn, Sb, Ga, In, Bi, Pb, and Cd, or an alloy or a compound containing the element as a main component, and has a melting point of 100°C or higher,
a component of the covering portion is one or more selected from the group consisting of an element, an alloy containing the element and an inorganic compound containing the element, and a mixture thereof, which cause no chemical reaction with the core particle in a temperature range of an operating temperature and which are different from the component of the core particle, and
at least a part of the covering portion has a particle shape.

2. The latent heat storage particle according to claim 1, wherein the core particle has an average particle diameter of 10 µm or more and 200 µm or less.

3. The latent heat storage particle according to claim 1 or 2, wherein a particle shape of at least a part of the covering portion has an average particle diameter of 0.1 µm or more and 2 µm or less.

4. The latent heat storage particle according to any one of claims 1 to 3, wherein a component of the core particle is one or more selected from the group consisting of Al, an Al-Si alloy, an Al-Cu-Si alloy, Sn, a Sn alloy, and a Zn-Al alloy.

5. The latent heat storage particle according to any one of claims 1 to 4, wherein the inorganic compound in the component of the covering portion is one or more selected from the group consisting of ceramics, glass, and an α-alumina precursor that becomes α-Al₂O₃ by firing.

6. The latent heat storage particle according to any one of claims 1 to 5, wherein the component of the covering portion is one or more selected from the group consisting of Al, α-Al₂O₃, AlOOH, Al(OH)₃, and glass.

7. The latent heat storage particle according to any one of claims 1 to 6, wherein the covering portion includes one or more selected from the group consisting of an element contained in the core particle, an alloy and an inorganic compound containing the element, and a mixture thereof.

8. A heat exchange material comprising the latent heat storage particle according to any one of claims 1 to 7.

9. A method for manufacturing a latent heat storage particle, comprising:
providing a core raw material particle in which a component is an element selected from the group consisting of Al, Mg, Si, Ti, Fe, Ni, Cu, Zn, Sn, Sb, Ga, In, Bi, Pb, and Cd, or an alloy or a compound containing the element as a main component and which has a melting point of 100°C or higher, and a child particle that is one or more selected from the group consisting of an element, an alloy containing the element and an inorganic compound containing the element, and a mixture thereof, which cause no chemical reaction with the core particle in a temperature range of an operating temperature and which are different from the component of the core particle, and
causing the core raw material particle and the child particle to collide with each other by a high-speed air flow impact method to perform hybridization in which the child particle is secured to a surface of the core raw material particle.

10. The method for manufacturing a latent heat storage particle according to claim 9, wherein
the core raw material particle has an average particle diameter of 10 µm or more and 200 µm or less,
the child particle has an average particle diameter of 0.1 µm or more and 2 µm or less, and
a ratio of (average particle diameter of child particle/average particle diameter of core raw material particle) is 0.001 or more and 0.2 or less.

11. The method for manufacturing a latent heat storage particle according to claim 9 or 10, wherein the hybridization is performed at a circumferential velocity of 40 m/s or more and 100 m/s or less.

12. The method for manufacturing a latent heat storage particle according to any one of claims 9 to 11, wherein heat treatment is performed at a temperature equal to or higher than the melting point of the component of the core raw material particle after the hybridization.
